(19) Europäisches Patentamt
European Patent Office
Office européen des brevets

(11) EP 2 395 334 B1

(12) **EUROPEAN PATENT SPECIFICATION**

(45) Date of publication and mention of the grant of the patent:
**28.12.2016 Bulletin 2016/52**

(21) Application number: **10738544.5**

(22) Date of filing: **03.02.2010**

(51) Int Cl.:
***G01K 11/12*** (2006.01) ***C09K 3/00*** (2006.01)
***B41M 5/28*** (2006.01) ***B41M 5/30*** (2006.01)
***B41M 5/333*** (2006.01) ***C09D 5/26*** (2006.01)
***C09D 7/12*** (2006.01) ***C09D 201/00*** (2006.01)
***C09B 11/24*** (2006.01)

(86) International application number:
**PCT/JP2010/051499**

(87) International publication number:
**WO 2010/090213 (12.08.2010 Gazette 2010/32)**

(54) **THERMAL DISTRIBUTION DISPLAY AND METHOD FOR CONFIRMING THERMAL DISTRIBUTION**

WÄRMEVERTEILUNGSANZEIGE UND VERFAHREN ZUR BESTÄTIGUNG DER WÄRMEVERTEILUNG

DISPOSITIF D'AFFICHAGE DE LA DISTRIBUTION THERMIQUE ET PROCÉDÉ POUR CONFIRMER LA DISTRIBUTION THERMIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.02.2009 JP 2009023418**

(43) Date of publication of application:
**14.12.2011 Bulletin 2011/50**

(73) Proprietor: **FUJIFILM Corporation**
**Tokyo 106-8620 (JP)**

(72) Inventor: **OZAWA, Shin**
**Fujinomiya-shi**
**Shizuoka 418-8666 (JP)**

(74) Representative: **Hoffmann Eitle**
**Patent- und Rechtsanwälte PartmbB**
**Arabellastraße 30**
**81925 München (DE)**

(56) References cited:
**EP-A1- 0 756 943**
**WO-A1-01/16095**
**JP-A- 5 042 768**
**JP-A- 5 126 651**
**JP-A- 6 015 963**
**JP-A- 9 315 007**
**JP-A- 11 301 118**
**JP-A- H09 123 612**
**JP-A- 2000 131 152**
**JP-A- 2004 117 145**
**JP-A- 2004 184 920**
**JP-A- 2005 305 996**
**JP-A- 2006 240 102**
**US-A- 4 467 339**
**US-A- 5 286 703**

- **DATABASE WPI Week 200434, Derwent Publications Ltd., London, GB; AN 2004-360194 & JP 2004 117145 A (DAINIPPON PRINTING CO LTD) 15 April 2004**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 395 334 B1

## Description

### Technical Field

The present invention relates to a thermal distribution display and a method of examining a thermal distribution.

### Background Art

Hot pressing has been conducted for the purpose of bonding of sheets, or heat transfer of a transfer layer coated on a film. In order to enhance the quality of a product and to shorten the tact time required for production, it is important to regulate the temperature and the temperature distribution at the hot-pressed surfaces to maintain proper values. Accordingly, it is necessary to measure the actual temperature. Conventionally, a method of measuring the temperature by sandwiching, between hot-pressed surfaces, a pseudo-surface temperature sensor that is formed by disposing a number of thermocouples, resistance temperature detectors, thermistors or the like on a sheet or a plate member, has been carried out (see, for example, Japanese Patent Application Laid-Open (JP-A) No. 5-52666).

Furthermore, as a sheet or method for examining a temperature of a large hot surface, there has been proposed a method of measuring temperature, which includes a hot pressing process that performs hot pressing by superposing a thermosensitive sheet on an object to be processed or within the material of the object and supplying the object between hot-pressed surfaces that face each other; a density measurement process that measures the density of measurement sites in the thermosensitive sheet after performing hot pressing; and a temperature calculation process that calculates the heating temperature of the hot press based on the measured density (see, for example, JP-A No. 2004-117145).

Furthermore, a heat-sensitive recording material using a salicylic acid-derived metal salt as a color developing agent has been proposed for the purposes of good transparency and improved color developing sensitivity (see, for example, JP-A No. 6-15963).

## SUMMARY OF INVENTION

### Technical Problem

However, in a pseudo-surface temperature sensor, there are discrepancies in mechanical and physical properties between a portion at which the thermocouples or resistance temperature detectors are disposed and a portion other than the foregoing portion. Such discrepancies exert influence in a state of being hot-pressed, whereby measuring of the original and substantive temperature distribution has been difficult. Even when there is a large number of dispersed measurement sites, a pseudo-surface temperature sensor, in principle, performs the measurement at each spot. Therefore, when the temperature of a large hot-pressed surface is measured, there are many cases in which important measurement sites are not included in the measuring points. Also, estimated values of temperature obtained by interpolation are not accurate enough, in some cases.

Furthermore, since a so-called heat-sensitive recording material or thermosensitive sheet such as those described above has high color developing sensitivity, the temperature range for sensing heat of an object is narrow and there is a rapid increase in the color optical density with a small temperature difference, whereby it has been difficult to examine a thermal distribution with a large temperature difference.

In view of the circumstances described above, an object of the invention is to provide a thermal distribution display which is capable of displaying a thermal distribution with a large temperature difference (for example, 30°C or greater) and is excellent in raw preservability of the thermal distribution display, and a method of examining a thermal distribution using the same.

### Solution to Problem

Specific means for achieving the object described above are as follows.

<1> A thermal distribution display including, on a support, a thermal distribution display layer which includes:

an organic polymer composite containing an electron-donating dye precursor and a polymer;
an electron-accepting compound A represented by the following formula (1) and an electron-accepting compound B represented by the following formula (2), which both develop a color of the electron-donating dye precursor; and
a binder,

wherein a content ratio (A : B) of the electron-accepting compound A represented by the formula (1) and the electron-accepting compound B represented by the formula (2) is from 95 : 5 to 70 : 30 on a mass basis, and a content of the electron-accepting compound A represented by the formula (1) in a total amount of electron-accepting compounds is 40% by mass or greater:

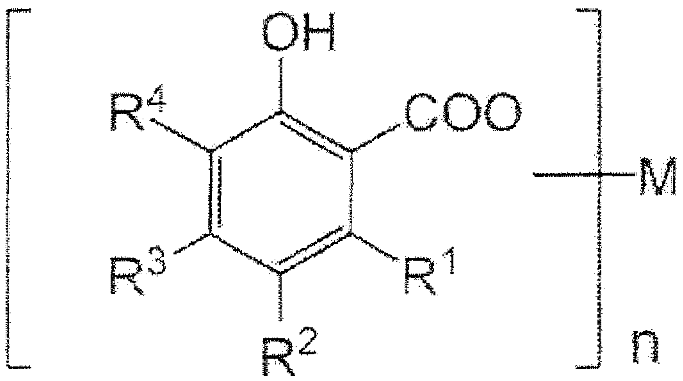

Formula (1)

wherein, in the formula (1), each of $R^1$, $R^2$, $R^3$ and $R^4$ independently represents a hydrogen atom, a halogen atom, an amino group, a carboxy group, a carbamoyl group, a hydroxy group, an alkylsulfonyl group, an alkyl group, a phenyl group, a benzyl group, a tolyl group, a naphthyl group, a 2-furyl group, a 2-thienyl group or a 2-pyridyl group and any two of $R^1$ to $R^4$ that are adjacent to each other may be bonded to form a ring; M represents a metal atom having a valency of n; and n represents an integer of from 1 to 3; and

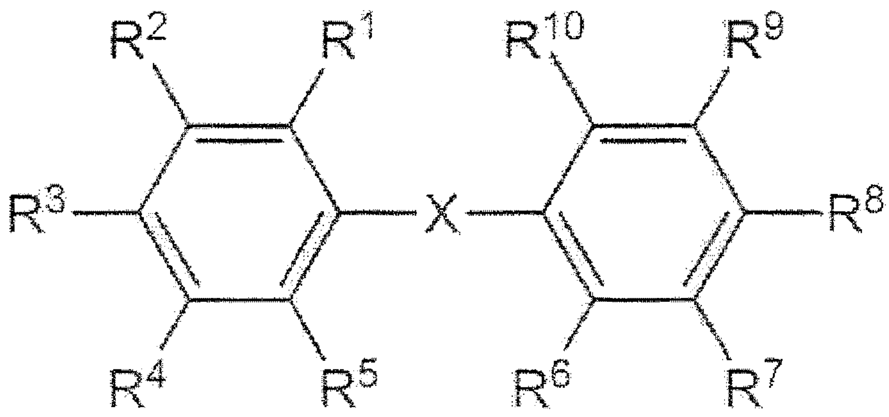

Formula (2)

wherein, in the formula (2), each of $R^1$ to $R^{10}$ independently represents a hydrogen atom, a halogen atom, a hydroxy group, a carboxy group, an alkoxy group having 1 to 4 carbon atoms, an alkyl group having 1 to 4 carbon atoms, or a phenylsulfonyl group; at least one of $R^1$ to $R^{10}$ is a hydroxy group; and X represents -S-, $-SO_2-$, $-SO_2NH-$, or $-OCH_2CH_2O-$.

<2> The thermal distribution display according to <1>, wherein the polymer is a polyurethane-polyurea.

<3> The thermal distribution display according to <1> or <2>, wherein when a temperature in °C at which a color optical density reaches [background optical density (Dmin) + 0.1] is designated as TA, a temperature in°C at which the color optical density reaches [maximum optical density (Dmax) - 0.1] is designated as TB, and an intermediate temperature in°C between TA and TB is designated as TC, the thermal distribution display layer satisfies the following expression (1) and expression (2):

$$0.011 \leqq \frac{(DC-DA)}{(TC-TA)} \leqq 0.035$$

Expression (1)

$$0.011 \leqq \frac{(DB-DC)}{(TB-TC)} \leqq 0.035$$

Expression (2)

wherein in the expression (1) and the expression (2), DA represents an optical density of a colored part where a color is developed as a result of heating the thermal distribution display layer to the temperature TA; DB represents an optical density of a colored part where a color is developed as a result of heating the thermal distribution display layer to the temperature TB; and DC represents an optical density of a colored part where a color is developed as a result of heating the thermal distribution display layer to the temperature TC.

<4> The thermal distribution display according to <3>, wherein a temperature difference between TA and TB (TB - TA) is 30°C or greater.

<5> The thermal distribution display according to <3> or <4>, wherein the items TA, TB, DA and DB satisfy the following expression (3):

$$0.011 \leqq \frac{(DB-DA)}{(TB-TA)} \leqq 0.029$$

Expression (3).

<6> The thermal distribution display according to any one of <3> to <5>, wherein TA, TB, TC, DA, DB, and DC satisfy the following expression (4):

$$-0.016 \leqq \frac{(DB-DC)}{(TB-TC)} - \frac{(DC-DA)}{(TC-TA)} \leqq 0.016$$

Expression (4).

<7> A method for examining a thermal distribution, including using the thermal distribution display according to any one of <1> to <6>.

Advantageous Effects of Invention

According to the present invention, there can be provided a thermal distribution display which is capable of displaying a thermal distribution with a large temperature difference (for example, 30°C or greater) and is excellent in raw preservability of the thermal distribution display, and a method of examining a thermal distribution using the same.

DESCRIPTION OF EMBODIMENTS

<Thermal distribution display>

In the invention, a thermal distribution display layer containing at least an organic polymer composite which contains an electron-donating dye precursor and a polymer; an electron-accepting compound A represented by the following formula (1) and an electron-accepting compound B represented by the following formula (2), which both develop the color of the electron-donating dye precursor; and a binder, wherein a content ratio (A : B) of the electron-accepting compound A represented by the formula (1) and the electron-accepting compound B represented by the formula (2) is from 95 : 5 to 70 : 30 on a mass basis, and a content of the electron-accepting compound A represented by the formula (1) in a total amount of the electron-accepting compounds is 40% by mass or greater is provided on a support.

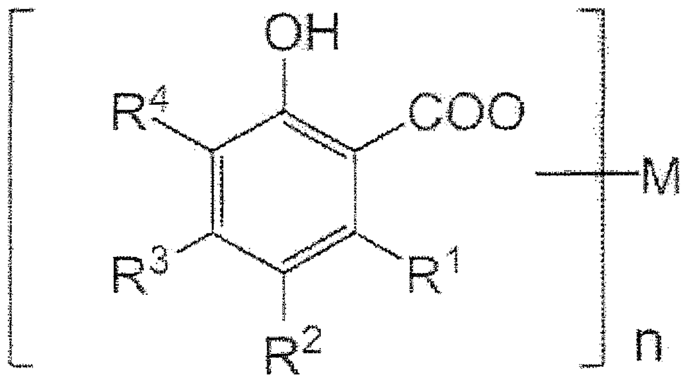

Formula (1)

In the formula (1), each of $R^1$, $R^2$, $R^3$ and $R^4$ independently represents a hydrogen atom, a halogen atom, an amino group, a carboxy group, a carbamoyl group, a hydroxy group, an alkylsulfonyl group, an alkyl group, a phenyl group, a benzyl group, a tolyl group, a naphthyl group, a 2-furyl group, a 2-thienyl group or a 2-pyridyl group, and any two of $R^1$ to $R^4$ that are adjacent to each other may be bonded to form a ring; M represents a metal atom having a valency of n; and n represents an integer of from 1 to 3.

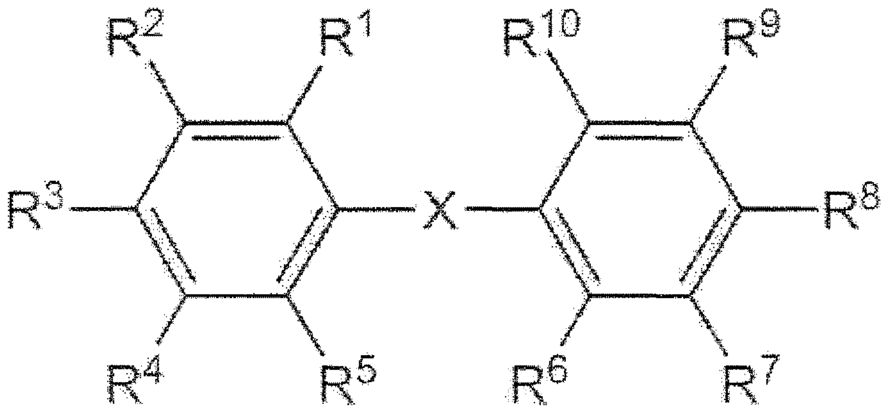

Formula (2)

In the formula (2), each of $R^1$ to $R^{10}$ independently represents a hydrogen atom, a halogen atom, a hydroxy group, a carboxy group, an alkoxy group having 1 to 4 carbon atoms, an alkyl group having 1 to 4 carbon atoms, or a phenylsulfonyl group, and at least one of $R^1$ to $R^{10}$ is a hydroxy group; and X represents -S-, $-SO_2-$, $-SO_2NH-$, or $-OCH_2CH_2O-$.

The thermal distribution display of the invention may have other layers such as a protective layer, a back layer or the like other than the thermal distribution display layer, to the extent that the effects of the invention are not impaired.

[Thermal distribution display layer]

The thermal distribution display layer in the thermal distribution display of the invention contains an organic polymer composite containing an electron-donating dye precursor and a polymer; specific electron-accepting compounds which develop the color of the electron-donating dye precursor; and a binder. The specific electron-accepting compounds include at least two kinds of electron-accepting compounds that are an electron-accepting compound represented by the formula (1) and an electron-accepting compound represented by the formula (2), and when the electron-accepting compound represented by the formula (1) is designated as A and the electron-accepting compound represented by the formula (2) is designated as B, the content ratio of A and B (A : B) is from 95 : 5 to 70 : 30 on a mass basis, and the content of the electron-accepting compound A represented by the formula (1) in the total amount of the electron-accepting compounds is 40% by mass or greater.

The electron-donating dye precursor and the electron-accepting compounds contained in the thermal distribution display layer according to the invention all have excellent transparency in an untreated state; however, the electron-donating dye precursor and the electron-accepting compounds react by a treatment of externally applying thermal energy such as heating or warming, thereby forming a dye and developing a color by giving and receiving of electrons between the electron-donating dye precursor and the electron-accepting compounds.

One of the thermal distribution display layer according to the invention may be provided, or two or more of the thermal distribution display layer according to the invention may be provided, in the thermal distribution display.

Hereinafter, the essential components contained in the thermal distribution display layer and other components that may be included as desired are described.

(Electron-accepting compounds)

The thermal distribution display layer according to the invention contains at least two kinds of electron-accepting compounds that are an electron-accepting compound represented by the following formula (1) and an electron-accepting compound represented by the following formula (2).

Hereinafter, the electron-accepting compound represented by the formula (1) is appropriately referred to as a "specific electron-accepting compound 1," and the electron-accepting compound represented by the formula (2) is appropriately referred to as a "specific electron-accepting compound 2." Furthermore, the specific electron-accepting compound 1 and the specific electron-accepting compound 2 are appropriately collectively referred to as "specific electron-accepting compounds."

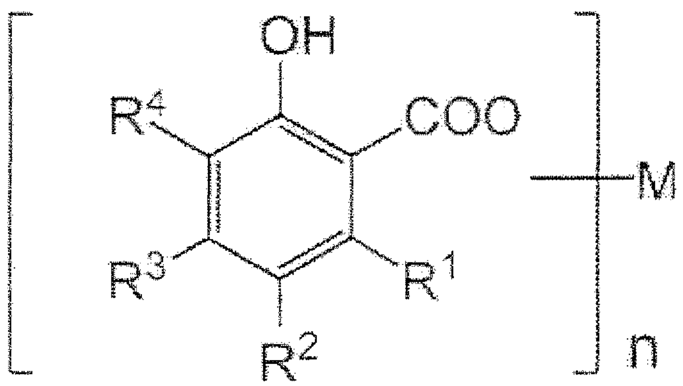

Formula (1)

In the formula (1), each of $R^1$, $R^2$, $R^3$ and $R^4$ independently represents a hydrogen atom, a halogen atom, an amino group, a carboxy group, a carbamoyl group, a hydroxy group, an alkylsulfonyl group, an alkyl group, a phenyl group, a benzyl group, a tolyl group, a naphthyl group, a 2-furyl group, a 2-thienyl group or a 2-pyridyl group, and any two of $R^1$ to $R^4$ that are adjacent to each other may be bonded to form a ring; M represents a metal atom having a valency of n; and n represents an integer of from 1 to 3.

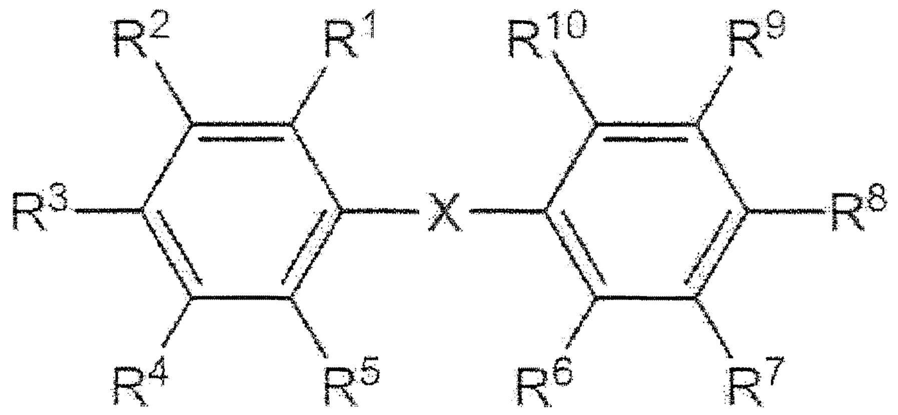

Formula (2)

In the formula (2), each of $R^1$ to $R^{10}$ independently represents a hydrogen atom, a halogen atome, a hydroxy group, a carboxy group, an alkoxy group having 1 to 4 carbon atoms, an alkyl group having 1 to 4 carbon atoms, or a phenylsulfonyl group, and at least one of $R^1$ to $R^{10}$ is a hydroxyl group; and X represents -S-, $-SO_2-$, $-SO_2NH-$, or $-OCH_2CH_2O-$.

- Specific electron-accepting compound 1 -

The specific electron-accepting compound 1 is a compound represented by the formula (1).

In the formula (1), each of $R^1$, $R^2$, $R^3$ and $R^4$ independently represents a hydrogen atom, a halogen atom, an amino group, a carboxy group, a carbamoyl group, a hydroxy group, an alkylsulfonyl group, an alkyl group, a phenyl group, a benzyl group, a tolyl group, a naphthyl group, a 2-furyl group, a 2-thienyl group or a 2-pyridyl group, and the amino group, carbamoyl group and alkyl group may further have a substituent.

The alkyl group represented by $R^1$, $R^2$, $R^3$ or $R^4$ in the formula (1) preferably has 1 to 8 carbon atoms, may be linear, branched or cyclic, and may further have a substituent such as a phenyl group, a halogen atom, or the like.

Examples of the alkyl group represented by $R^1$, $R^2$, $R^3$ or $R^4$ include methyl, ethyl, t-butyl, and cyclohexyl. It is more preferable that the alkyl group represented by $R^1$, $R^2$, $R^3$ or $R^4$ is linear or branched and has 1 to 4 carbon atoms (not including the carbon atoms of the substituent).

$R^1$, $R^2$, $R^3$ or $R^4$ in the formula (1) may be represented by a phenyl group, a benzyl group, a tolyl group, a naphthyl group, a 2-furyl group, a 2-thienyl group or a 2-pyridyl group.

As an example $R^1$, $R^2$, $R^3$ or $R^4$ include preferably phenyl, benzyl, tolyl, naphthyl, 2-furyl, 2-thienyl, and 2-pyridyl.

Examples of the substituent that the amino group, carbamoyl group, alkyl group , phenyl group, benzyl group, tolyl group, naphthyl group, 2-furyl group, 2-thienyl group and 2-pyridyl group may have include a halogen atom, an amino group, a carboxy group, a carbamoyl group, a hydroxy group, an alkylsulfonyl group, an alkyl group, and an aryl group, and it is preferable that the substituent has 1 to 8 carbon atoms.

Among the above, each of $R^1$ to $R^4$ preferably represents a hydrogen atom, an alkyl group, a phenyl group, a benzyl group, a tolyl group, a naphthyl group, a 2-furyl group, a 2-thienyl group or a 2-pyridyl group.

As a preferred combination of $R^1$ to $R^4$, a combination in which $R^1$ is a hydrogen atom; $R^2$ is an alkyl group having 2 or 3 carbon atoms and having a phenyl group (when the carbon atoms of the phenyl group are included, the alkyl group has 8 or 9 carbon atoms); $R^3$ is a hydrogen atom; and $R^4$ is an alkyl group having 2 or 3 carbon atoms and having a phenyl group (when the carbon atoms of the phenyl group are included, the alkyl group has 8 or 9 carbon atoms) is preferable.

Furthermore, any two of $R^1$ to $R^4$ that are adjacent to each other may be bonded together to form a ring.

M represents a metal atom having a valency of n, and n represents an integer of from 1 to 3.

Examples of M include a sodium atom, a potassium atom, a copper atom, an aluminum atom, a calcium atom, and a zinc atom. Among them, a polyvalent metal atom, that is, a di- or higher-valent metal atom is preferred, and M is preferably an aluminum atom, a calcium atom, or a zinc atom. M is more preferably a zinc atom.

Specific examples of the specific electron-accepting compound 1 include the following, but the invention is not intended to be limited thereto.

Examples include a zinc, aluminum, calcium or copper salt of 4-pentadecylsalicylic acid, 3,5-di($\alpha$-methylbenzyl)salicylic acid, 3,5-di(tert-octyl)salicylic acid, 5-$\alpha$-(p-$\alpha$-methylbenzylphenyl)ethylsalicylic acid, 3-$\alpha$-methylbenzyl-5-tert-octylsalicylic acid, 5-tetradecylsalicylic acid, 4-hexyloxysalicylic acid, 4-cyclohexyloxysalicylic acid, 4-decyloxysalicylic acid, 4-dodecyloxysalicylic acid, 4-pentadecyloxysalicylic acid, and 4-octadecyloxysalicylic acid.

- Specific electron-accepting compound 2 -

The specific electron-accepting compound 2 is a compound represented by the formula (2).

In the formula (2), each of $R^1$ to $R^{10}$ independently represents a hydrogen atom, a halogen atom, a hydroxy group, a carboxy group, an alkoxy group having 1 to 4 carbon atoms, an alkyl group having 1 to 4 carbon atoms, or a phenylsulfonyl group, and at least one of $R^1$ to $R^{10}$ is a hydroxy group. X represents $-S-$, $-SO_2-$, $-SO_2NH-$, or $-OCH_2CH_2O-$.

In the formula (2), the alkyl group of the alkoxy group represented by $R^1$ to $R^{10}$, and the alkyl group represented by $R^1$ to $R^{10}$ may be linear (for example, n-butyl), branched (for example, tert-butyl), or cyclic (for example, cyclobutyl).

In the formula (2), the alkoxy group represented by $R^1$ to $R^{10}$ preferably has I or 3 carbon atoms, and the alkyl group preferably has 1 or 4 carbon atoms.

Among the above, it is preferable that each of $R^1$ to $R^{10}$ represents a hydrogen atom, an alkyl group, a hydroxy group, a carboxy group, or an alkoxy group.

Specific examples of the specific electron-accepting compound 2 (compound (2-1) to compound (2-4)) include the following, but the invention is not intended to be limited thereto.

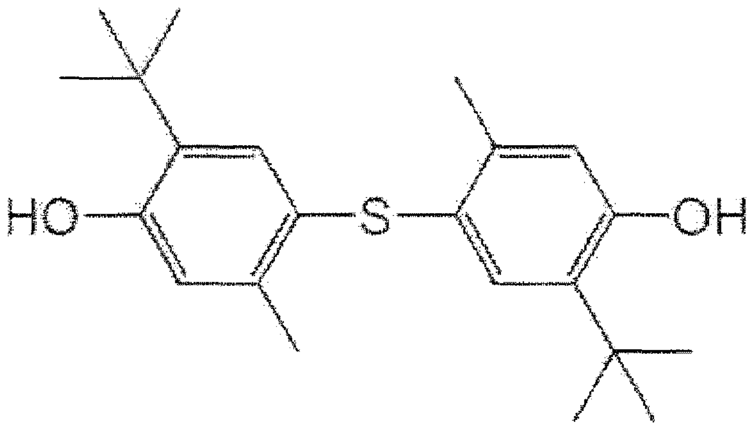

Compound (2-1)

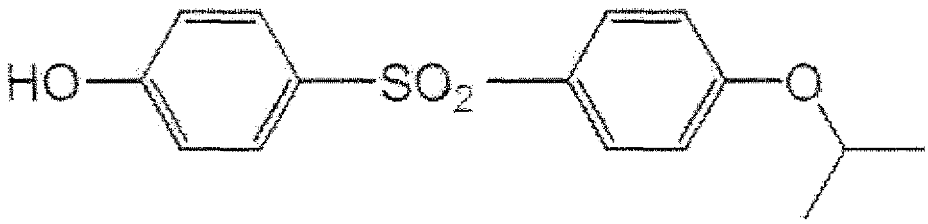

Compound (2-2)

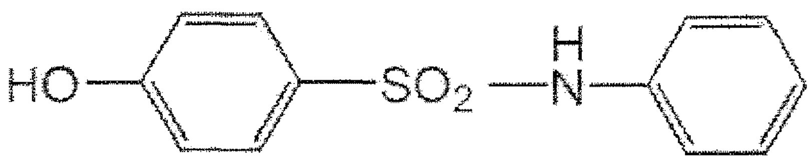

Compound (2-3)

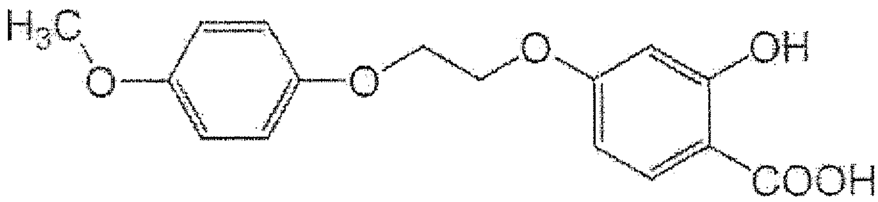

Compound (2-4)

The thermal distribution display layer according to the invention needs to contain at least two kinds of electron-accepting compounds that comprise the specific electron-accepting compound 1 and the specific electron-accepting compound 2. When the thermal distribution display contains only one of the specific electron-accepting compound 1 or the specific electron-accepting compound 2, the raw preservability of the thermal distribution display cannot be enhanced.

Furthermore, it is necessary that the specific electron-accepting compound 1 and the specific electron-accepting compound 2 is contained in the thermal distribution display layer according to the invention at a specific quantity ratio. That is, when the specific electron-accepting compound 1 is designated as A, and the specific electron-accepting compound 2 is designated as B, the quantity ratio of the two compounds (A : B) is from 95 : 5 to 70 : 30 on a mass basis.

When the proportion of the specific electron-accepting compound 1 (A) is greater than 95% by mass with respect to the specific electron-accepting compound 2 (B), raw preservability can not be maintained. When the proportion of the specific electron-accepting compound 1 (A) is less than 50% by mass with respect to the proportion of the specific electron-accepting compound 2 (B), a broad range of the thermal distribution can not be examined.

The quantity ratio (A : B) of the specific electron-accepting compound 1 (A) and the specific electron-accepting compound 2 (B) is preferably from 95 : 5 to 70 : 30, and more preferably from 90 : 10 to 80 : 20, on a mass basis.

Additionally, the content of the specific electron-accepting compound 1 in the total amount of the electron-accepting compounds is 40% by mass or greater. That is, the content of the specific electron-accepting compound 1 with respect to the total mass of all electron-accepting compounds consisting of the specific electron-accepting compound 1, the specific electron-accepting compound 2, and other electron-accepting compounds which may be contained as necessary, is 40% by mass or greater.

When the content of the specific electron-accepting compound 1 is less than 40% by mass with respect to the total mass of all the electron-accepting compounds, there is an increase in $\gamma 1$ to $\gamma 3$ that are described below, that is, the difference in the color optical density due to unit temperature change increases, and thus a thermal distribution display with a large temperature difference cannot be achieved.

As described above, the thermal distribution display layer according to the invention contains at least the specific electron-accepting compound 2, in addition to the specific electron-accepting compound 1. Accordingly, it is needless to say that the content of the specific electron-accepting compound 1 is less than 100% by mass with respect to the total mass of all the electron-accepting compounds, and when the specific electron-accepting compound 1 is designated as A, and the specific electron-accepting compound 2 is designated as B, the thermal distribution display layer according to the invention contains the specific electron-accepting compound 1 in an amount such that the quantity ratio of the two compounds (A : B) is in the range of from 95 : 5 to 70 : 30 on a mass basis.

The upper limit of the content of the specific electron-accepting compound 1 with respect to the total mass of all the electron-accepting compounds is preferably 95% by mass, and more preferably 90% by mass or less.

Furthermore, the content of the specific electron-accepting compound 1 with respect to the total mass of all the electron-accepting compounds is even more preferably from 50% by mass to 95% by mass, and particularly preferably from 70% by mass to 90% by mass.

The specific electron-accepting compounds described above and other electron-accepting compounds are not included in the organic polymer composite.

The content of the specific electron-accepting compounds (total content of the specific electron-accepting compound I and the specific electron-accepting compound 2) is preferably from 20% by mass to 1000% by mass, and more preferably from 50% by mass to 500% by mass, with respect to the total solid content of the electron-donating dye precursor, from the viewpoint of the color optical density.

(Organic polymer composite)

The organic polymer composite according to the invention contains an electron-donating dye precursor and a polymer.

A form of the organic polymer composite is not particularly limited, and may be a form obtained by mixing at least an electron-donating dye precursor and a polymer, or may be a form in which an electron-donating dye precursor

is encapsulated in a microcapsule (hereinafter, also simply referred to as a "capsule") produced using a polymer.

When the electron-donating dye precursor is contained in the thermal distribution display layer as a part of the organic polymer composite, a thermal responsiveness in which color is developed by heat can be imparted, and also, reaction between the electron-donating dye precursor and the electron-accepting compounds to develop color before a treatment of external application of thermal energy such as heating or warming is performed can be prevented. Furthermore, the storage stability of the thermal distribution display can be enhanced.

- Electron-donating dye precursor -

The electron-donating dye precursor which is preferably used in the invention is not particularly limited, as long as the electron-donating dye precursor is substantially colorless. However, the electron-donating dye precursor has a property of developing a color by donating electrons or by accepting protons from an acid or the like, and particularly preferably is a colorless compound which has a partial skeleton of lactone, lactam, sultone, spiropyran, ester, amide or the like, and in which the partial skeleton undergoes ring-opening or cleavage when the electron-donating dye precursor contacts the electron-accepting compounds.

Examples of the electron-donating dye precursor include a triphenylmethanephthalide-based compound, a fluoran-based compound, a phenothiazine-based compound, an indolylphthalide-based compound, a leuco Auramine-based compound, a Rhodamine lactam-based compound, a triphenylmethane-based compound, a triazene-based compound, a spiropyran-based compound, a fluorene-based compound, a pyridine-based compound, and a pyrazine-based compound.

Specific examples of the phthalide compound include compounds described in the specification of U.S. Reissue Patent No. 23024, U.S. Patent Nos. 3491111, 3491112, 3491116 and 3509174.

Specific examples of the fluoran compound include compounds described in the specification of U.S. Patent Nos. 3624107, 3627787, 3641011, 3462828, 3681390, 3920510 and 3959571.

Specific examples of the spiropyran compound include compounds described in the specification of U.S. Patent No. 3971808.

Examples of the pyridine-based compound and pyrazine-based compound include compounds described in the specification of U.S. Patent Nos. 3775424, 3853869 and 4246318.

Specific examples of the fluorene-based compound include compound described in JP-A No. 63-094878.

Among these, 2-arylamino-3-[H, halogen, alkyl or alkoxy-6-substituted aminofluoran] which develop black color is particularly suitably used.

Specific examples thereof include 2-anilino-3-methyl-6-diethylaminofluoran,

2-anilino-3-methyl-6-N-cyclohexyl-N-methylaminofluoran,
2-p-chloroanilino-3-methyl-6-dibutylaminofluoran, 2-anilino-3-methyl-6-dioctylaminofluoran,
2-anilino-3-chloro-6-diethylaminofluoran,
2-anilino-3-methyl-6-N-ethyl-N-isoamylaminofluoran,
2-anilino-3-methyl-6-N-ethyl-N-dodecylaminofluoran,
2-amino-3-methoxy-6-dibutylaminofluoran, 2-o-chloroanilino-6-dibutylaminofluoran,
2-p-chloroanilino-3-ethyl-6-N-ethyl-N-isoamylaminofluoran,
2-o-chloroanilino-6-p-butylanilinofluoran, 2-anilino-3-pentadecyl-6-diethylaminofluoran,
2-anilino-3-ethyl-6-dibutylaminofluoran, 2-o-toluidino-3-methyl-6-diisopropylaminofluoran,
2-anilino-3-methyl-6-N-isobutyl-N-ethylaminofluoran,
2-anilino-3-methyl-6-N-ethyl-N-tetrahydrofurfurylaminofluoran,
2-anilino-3-chloro-6-N-ethyl-N-isoamylaminofluoran,
2-anilino-3-methyl-6-N-methyl-N-γ-ethoxypropylaminofluoran,
2-anilino-3-methyl-6-N-ethyl-N-γ-ethoxypropylaminofluoran, and
2-anilino-3-methyl-6-N-ethyl-N-γ-propoxypropylaminofluoran.

It is preferable that, as an organic polymer composite, the electron-donating dye precursor encapsulated in a capsule produced with the polymer described below is used, from the viewpoints of storage stability and prevention of a background fogging.

The content of the electron-donating dye precursor is preferably from 3% by mass to 30% by mass, and more preferably from 5% by mass to 20% by mass, with respect to the total solid content of the thermal distribution display layer, from the viewpoints of the color optical density, adhesiveness to the support, and prevention of the adhesion to a heat source.

- Polymer -

The organic polymer composite according to the invention contains a polymer.

The polymer is not particularly limited as long as it is a polymer compound capable of forming an organic polymer composite together with the electron-donating dye precursor, and polyethylene, polystyrene, polyvinyl, polyurethane, polyurea, polyurethane-polyurea, and the like may be used.

Among the above, the organic polymer composite according to the invention preferably contains a polymer obtained using an isocyanate compound and a volatile organic solvent, which are described below, from the viewpoints of storage stability and prevention of surface fogging, and polyurethane-polyurea is particularly preferred.

[Isocyanate compound]

The scope of the isocyanate compound for obtaining the polymer includes an isocyanate compound in which an aromatic compound, a hydrocarbon compound or the like has two or more isocyanate groups, as well as a condensate, a polymer or an adduct or the like using an isocyanate compound. A compound having two or more isocyanate groups in one molecule (including a polymer, an adduct product, or the like) is preferred.

Examples of the compound in which an aromatic compound, a hydrocarbon compound or the like has two isocyanate groups include m-phenylene diisocyanate, p-phenylene diisocyanate, 2,6-tolylene diisocyanate, 2,4-tolylene diisocyanate, naphthalene-1,4-diisocyanate, diphenylmethane-4,4'-diisocyanate, 3,3'-dimethoxybiphenyl diisocyanate, 3,3'-dimethyldiphenylmethane-4,4'-diisocyanate, xylylene-1,4-diisocyanate, xylylene-1,3-diisocyanate, 4-chloroxylylene-1,3-diisocyanate, 2-methylxylylene-1,3-diisocyanate, 4,4'-diphenylpropane diisocyanate, 4,4'-diphenylhexafluoropropane diisocyanate, trimethylene diisocyanate, hexamethylene diisocyanate, propylene-1,2-diisocyanate, butylene-1,2-diisocyanate, cyclohexylene-1,2-diisocyanate, cyclohexylene-1,3-diisocyanate, cyclohexylene-1,4-diisocyanate, dicyclohexylmethane-4,4'-diisocyanate, 1,4-bis(isocyanatomethyl)cyclohexane, 1,3-bis(isocyanatomethyl)cyclohexane, isophorone diisocyanate, and lysine diisocyanate.

Examples of bifunctional diisocyanate compounds are listed in the above, but trifunctional triisocyanate compounds and tetrafunctional tetraisocyanate compounds inferred from the diisocyanate compounds may also be used.

Furthermore, an adduct product of the above-described isocyanate compound with a bifunctional alcohol such as ethylene glycols and bisphenols or with a phenol may also be used.

Examples of the condensate, polymer or adduct using an isocyanate compound which may also be used include biuret or isocyanurate, which are each trimers of the bifunctional isocyanate compound described above; a polyfunctional adduct of the bifunctional isocyanate compound and a polyol such as trimethylolpropane; a formalin condensate of benzene isocyanate; a polymer of the isocyanate compound having a polymerizable group such as methacryloyloxyethyl isocyanate; and lysine triisocyanate. Particularly, a trimer (biuret or isocyanurate) having xylene diisocyanate and hydrogenation products thereof, hexamethylene diisocyanate, tolylene diisocyanate and hydrogenation products thereof as main raw materials, as well as polyfunctional adducts of the foregoing compounds with trimethylolpropane are preferred.

Descriptions on these compounds are found in "Polyurethane Resin Handbook" (edited by Keiji Iwata, published by Nikkan Kogyo Shimbun, Ltd., 1987).

Among these, as the polyfunctional isocyanate,an aromatic polyfunctional isocyanate is preferable, and for example, 2,4-tolylene diisocyanate, 2,6-tolylene diisocyanate, xylylene-1,4-diisocyanate, xylylene-1,3-diisocyanate, and an adduct of trimethylolpropane with xylylene-1,4-diisocyanate or xylylene-1,3-diisocyanate are preferred, and particularly, xylylene-1,4-diisocyanate and xylylene-1,3-diisocyanate, and an adduct of trimethylolpropane with xylylene-1,4-diisocyanate or xylene-1,3-diisocyanate are preferred.

[Volatile organic solvent]

The volatile organic solvent means an organic solvent having a boiling point of from 40°C to less than 150°C, and preferably, an organic solvent having a boiling point of from 40°C to 130°C.

Examples of the volatile organic solvent used to obtain the polymer include ethyl acetate (boiling point 77°C), isopropyl acetate (boiling point 88°C), butyl acetate (boiling point from 124°C to 127°C), isobutyl acetate (boiling point 118°C), methylene chloride (boiling point 40°C), and tetrahydrofuran (boiling point 66°C). Two or more kinds of the solvents may also be mixed and used. Among these, ethyl acetate is particularly preferred.

According to the invention, a 50% volume average particle diameter (D50v) of an organic polymer composite is preferably from 0.1 $\mu$m to 5 $\mu$m. When the D50v of the organic polymer composite is from 0.1 $\mu$m to 5 $\mu$m, the temperature range causing color development can be regulated arbitrarily.

Here, the particle diameter (volume average particle diameter) of the organic polymer composite means a value measured using a laser diffraction particle size distribution analyzer (trade name: "LA750," manufactured by Horiba,

Ltd.). A volume-cumulative distribution for divided particle size ranges (channels) is plotted from the smaller particle diameter side based on the particle size distribution thus obtained, and the particle diameter at cumulative 50% is referred to as the "50% volume average particle diameter (D50v)."

The 50% volume average particle diameter (D50v) is simply referred to as a "volume average particle diameter" or "particle diameter" in some cases, and the same also applies to the volume average particle diameter in the following descriptions.

- Production of organic polymer composite -

The organic polymer composite can be produced by, for example, dispersing, in an aqueous phase, an electron-donating dye precursor-containing liquid which includes the electron-donating dye precursor, the isocyanate compound and the volatile organic solvent to prepare a dispersion liquid in which oil droplets containing the electron-donating dye precursor-containing liquid has been dispersed (dispersion step), and performing a polymerization reaction of the isocyanate compound in the oil droplets (polymerization step).

The content of the volatile organic solvent in the dispersion liquid when the extent of reactivity of the isocyanate compound in the polymerization step is 70% is preferably adjusted to 10% by mass or less with respect to the content at the initiation of the polymerization reaction.

Hereinafter, the method of producing an organic polymer composite is described in detail.

- Dispersion step -

The dispersion step according to the invention is a step of emulsifying-dispersing, in an aqueous phase, an electron-donating dye precursor-containing liquid (oil phase) as oil droplets. The emulsifying-dispersion can be easily carried out by using means that are used in emulsification of general fine particle such as a high-speed stirrer, an ultrasonic dispersing apparatus, or the like, for example, using a homogenizer, a Manton Gorlin, an ultrasonic disperser, a dissolver, a Kady mill, and other known apparatuses for emulsifying dispersion.

The mixing ratio of the oil phase with respect to the aqueous phase (mass of oil phase/mass of aqueous phase) is preferably from 0.5 to 1.5, and more preferably from 0.7 to 1.2. When the mixing ratio is in the range of from 0.5 to 1.5, an appropriate viscosity can be retained, the production suitability is excellent, and the stability of the emulsion liquid is excellent.

For the aqueous phase to be used, it is preferable to use an aqueous solution in which a water-soluble polymer is dissolved as a protective colloid, and the water-soluble polymer facilitates uniform and easy dispersion, and also acts as a dispersion medium stabilizing the aqueous solution that has been emulsifying-dispersed.

Examples of the water-soluble polymer include polyvinyl alcohol and modification products thereof, polyacrylic acid amide and derivatives thereof, an ethylene/vinyl acetate copolymer, a styrene/maleic acid anhydride copolymer, an ethylene/maleic acid anhydride copolymer, an isobutylene/maleic acid anhydride copolymer, polyvinylpyrrolidone, an ethylene/acrylic acid copolymer, a vinyl acetate/acrylic acid copolymer, carboxymethyl cellulose, methyl cellulose, casein, gelatin, starch derivatives, gum arabic, and sodium alginate, and it is preferable to use polyvinyl alcohol and modification products thereof, gelatin and modification products thereof, and cellulose derivatives.

It is preferable that these water-soluble polymers do not react, or hardly react, with the isocyanate compound, and for example, for a polymer having a reactive amino group in the molecular chain such gelatin, it is necessary to eliminate the reactivity in advance.

The water-soluble polymer may be used singly, or two or more kinds may be used in combination.

According to the invention, since polyether also works as a surfactant, in the case of adding a polyether compound into the electron-donating dye precursor-containing liquid, dispersion can be stably carried out without adding a separate surfactant; however, a surfactant may also be added as necessary, to the extent that no adverse effects are exerted on the performance of the thermal distribution display. The surfactant may be used by being added to either the oil phase or the aqueous phase. The amount of use of the surfactant is preferably 1% by mass or less, and particularly preferably 0.5% by mass or less, with respect to the mass of the oil phase.

The surfactant that is generally used in emulsifying-dispersion can be appropriately selected and used from anionic or nonionic surfactants, but a surfactant having relatively long-chained hydrophobic groups is excellent ("Surfactant Handbook," Ichiro Nishi et al., published by Sangyo Tosho Co., Ltd., 1980).

A preferred surfactant is an alkali metal salt of alkylsulfonic acid, alkylbenzenesulfonic acid or the like, and examples thereof include sodium alkylbenzenesulfonate, sodium alkyl sulfate, sulfosuccinic acid dioctyl sodium salt, polyalkylene glycol (for example, polyoxyethylene nonyl phenyl ether), and acetylene glycol.

Furthermore, a compound such as a formalin condensate of an aromatic sulfonic acid salt, and a formalin condensate of an aromatic carboxylic acid salt can also be used as the surfactant (emulsifying aid). Specific examples include a compound represented by the following formula (I). The Compound represented by the following formula (I)

is described in JP-A No. 6-297856.

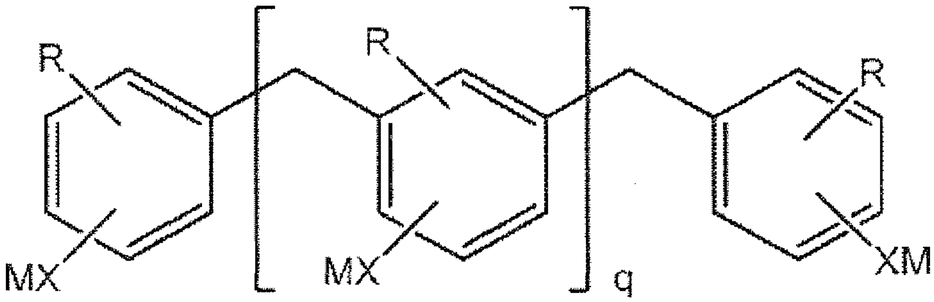

Formula (I)

In the formula (1), R represents an alkyl group having 1 to 4 carbon atoms; X represents $SO_3^-$ or $COO^-$; M represents a sodium ion or a potassium ion; and q represents an integer of from 1 to 20.

Furthermore, alkyl glucoside-based compounds may also be used in the same manner. Specific examples include a compound represented by the following formula (II).

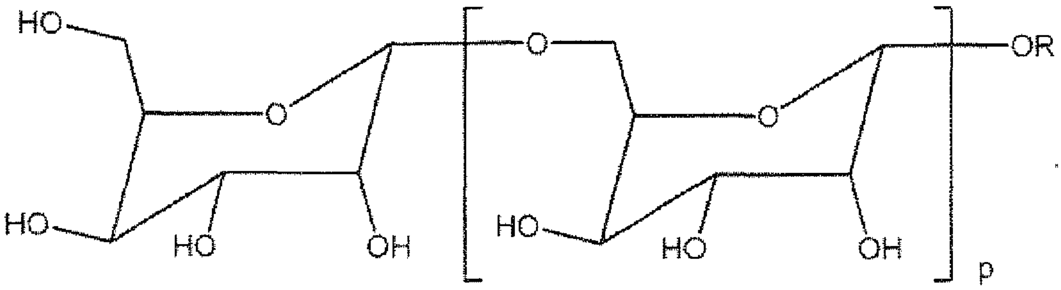

Formula (II)

In the formula (II), R represents an alkyl group having 4 to 18 carbon atoms; and p represents an integer of from 0 to 2.

The surfactant may be used singly, or two or more kinds may be appropriately used in combination.

The particle diameter of the emulsion particles, which are the oil droplets obtained by the dispersion step, is preferably the same as the 50% volume average particle diameter (D50v) of the organic polymer composite, and the referable range of the particle diameter of the emulsion particles is also the same.

- Polymerization step -

The polymerization step is a step of performing a polymerization reaction of the isocyanate compound contained in the oil droplets. The content of the volatile organic solvent in the dispersion liquid can be appropriately adjusted by regulating the stirring speed or stirring time of the dispersion liquid, and the liquid temperature or the exhaust air flow at the time of polymerization reaction.

The polymerization reaction can be carried out by adding, to the dispersion liquid, a polymerization-reaction catalyst of the isocyanate compound, or by raising the temperature of the dispersion liquid.

In a general method for producing a microcapsule, a compound which causes an addition reaction with an isocyanate compound, for example, a polyol or a polyfunctional amino compound, is added to the aqueous phase, and the isocyanate contained in the oil phase undergoes an addition reaction not only with an active hydrogen of a water molecule but also with the polyol or polyfunctional amino compound contained in the aqueous phase at the interface, whereby a polyurethane or a polyurea is produced, and thus a wall is formed.

Specific examples of the polyol that can be added to the aqueous phase include propylene glycol, glycerin and trimethylolpropane, and these polyols may be used singly, or in combination of two or more kinds. Also, examples of the polyfunctional amino compound that can be added to the aqueous phase include diethylenetriamine and tetraethylenepentamine, and these polyfunctional amino compounds may be used singly, or in combination of two or more kinds. Furthermore, the polyol and the polyfunctional amino compound may be used in combination. These compounds are

also described in the "Polyurethane Resin Handbook" mentioned above.

In order to prevent aggregation of the organic polymer composite molecules during the polymerization step, it is preferable to reduce the probability of collision between the organic polymer composite molecules by adding water, and it is also preferable to perform sufficient stirring. The addition amount of water is preferably such that the concentration of the electron-donating dye precursor-containing liquid is from 2% by mass to 50% by mass, and more preferably from 5% by mass to 30% by mass.

Furthermore, a dispersant for preventing aggregation may be added again during the polymerization step. Along with the progress of the polymerization reaction, generation of carbon dioxide gas is observed, and termination of the generation of the gas can be considered as the approximate end point of the reaction of formation. Typically, when the reaction is carried out for several hours, the desired organic polymer composite can be obtained.

In the method of producing the organic polymer composite described above, a charge controlling agent such as a metal-containing dye, nigrosine or the like, or other optional additive substances may be added as necessary. These additives can be added at the time of wall formation, or at a given time point.

After the polymerization step, it is also preferable to perform heating to remove the volatile organic solvent contained in the organic polymer composite. When the volatile organic solvent remains, the volatile organic solvent slowly volatilizes during storage, whereby the performance is prone to be unstable. The heating temperature for removing the volatile organic solvent depends on the type of the volatile organic solvent to be used, but is preferably lower than 100°C, and more preferably from 40°C to 70°C.

The content of the electron-donating dye precursor in the electron-donating dye precursor-containing liquid is preferably from 5% to 50% by mass, and more preferably from 10% to 30% by mass.

The content of the isocyanate compound in the electron-donating dye precursor-containing liquid is preferably from 2% to 50% by mass, and more preferably from 5% to 30% by mass.

Furthermore, the content of the isocyanate compound in the electron-donating dye precursor-containing liquid is preferably from 5 to 75 parts by mass, and more preferably from 10 to 50 parts by mass, with respect to 100 parts by mass of the volatile organic solvent. When the content of the isocyanate compound is from 5 to 75 parts by mass with respect to 100 parts by mass of the volatile organic solvent, the extent of reactivity of the isocyanate compound is easily controlled by controlling the evaporation of the volatile organic solvent.

The content of the volatile organic solvent in the electron-donating dye precursor-containing liquid is preferably from 20% to 90% by mass, and more preferably from 30% to 70% by mass.

The electron-donating dye precursor-containing liquid may appropriately contain an ultraviolet absorber, an oxidation inhibitor and the like, if necessary.

The electron-donating dye precursor-containing liquid is prepared by mixing a specific amount of the electron-donating dye precursor, the isocyanate compound, the volatile organic solvent, and other components that are used as necessary, and using a known technique such as stirring or dispersing. The electron-donating dye precursor-containing liquid may be in the state of a solution, or may be in the state of a dispersion liquid.

(Binder)

The thermal distribution display layer according to the invention contains a binder.

Examples of the binder include hydroxyethyl cellulose, hydroxypropyl cellulose, epichlorohydrin-modified polyamide, an ethylene-maleic acid anhydride copolymer, a styrene-maleic acid anhydride copolymer, an isobutylene-maleic salicylic anhydride copolymer, polyacrylic acid, polyacrylic acid amide, methylol-modified polyacrylamide, a starch derivative, casein, and gelatin.

Furthermore, for the purpose of imparting water resistance to these binders, a water resistance improving agent may be added, or an emulsion of a hydrophobic polymer, specifically, an acrylic resin emulsion, a styrene-butadiene latex or the like may also be added.

The content of the binder is preferably from 8% by mass to 30% by mass, and more preferably from 10% by mass to 20% by mass, with respect to the total solid content of the thermal distribution display layer, from the viewpoint of preventing transfer of the thermal distribution display layer to a heat source.

As the binder to be used in the thermal distribution display layer, polyvinyl alcohol is preferably used as the binder from the viewpoint of achieving satisfactory transparency, and a modified PVA such as a carboxy-modified polyvinyl alcohol, a silica-modified polyvinyl alcohol or the like may also be used. Furthermore, a known film hardening agent or the like may be incorporated into the thermal distribution display layer. Examples of the film hardening agent include an inorganic compound such as boric acid, borax, and colloidal silica; an aldehyde derivative, and a dialdehyde derivative.

(Other components)

The thermal distribution display layer may further contain other components, in addition to the essential components such as the specific electron-accepting compound 1, the specific electron-accepting compound 2, the binder, and the like. The other components are not particularly limited and may be appropriately selected according to the purpose or according to necessity. Examples of the other components include a sensitizer, a pigment, a lubricating agent, a known heat-fusible substance, an ultraviolet absorber, an oxidation inhibitor, and an antistatic agent.
Hereinafter, the other components that may be used in the thermal distribution display layer are described.

- Sensitizer -

The thermal distribution display layer may contain a sensitizer in order to accelerate color development. The sensitizer is preferably a low-melting point organic compound which appropriately has an aromatic group and a polar group in a molecule thereof. Specific examples thereof include benzyl p-benzyloxybenzoate, α-naphthyl benzyl ether, β-naphthyl benzyl ether, β-naphthoic acid phenyl ester, α-hydroxy-β-naphthoic acid phenyl ester, β-naphthol-(p-chlorobenzyl) ether, 1,4-butanediol phenyl ether, 1,4-butanediol-p-methyl phenyl ether, 1,4-butanediol-p-ethyl phenyl ether, 1,4-butanediol-m-methyl phenyl ether, 1-phenoxy-2-(p-tolyloxy)ethane, 1-phenoxy-2-(p-ethylphenoxy)ethane, 1-phenoxy-2-(p-chlorophenoxy)ethane, p-benzylbiphenyl, p-toluenesulfonamide, 4-(2-ethylhexyloxy)phenylsulfonamide, and 4-n-pentyloxyphenylsulfonamide.
According to the invention, two or more kinds of these sensitizers may be used in combination at a given ratio.

- Pigment -

The thermal distribution display layer may contain a pigment.
As the pigment used in the thermal distribution display layer, both an organic pigment and an inorganic pigment can be used.
The volume average particle diameter of the pigment used in the thermal distribution display layer is preferably from 0.10 μm to 5.0 μm.
The type of the pigment that can be used in the thermal distribution display layer is not particularly limited, and can be appropriately selected from known organic and inorganic pigments and used. However, among them, the inorganic pigment such as calcium carbonate, titanium oxide, kaolin, aluminum hydroxide, amorphous silica, zinc oxide, or the like; and the organic pigment such as a urea-formalin resin, an epoxy resin, or the like are preferable. Particularly, among them, kaolin, aluminum hydroxide, and amorphous silica are more preferable. These pigments may be used singly, or two or more kinds may be used in combination. Furthermore, among the pigments described above, a pigment having the surface coated with at least one selected from the group consisting of a higher fatty acid, a metal salt of a higher fatty acid or a higher alcohol can be suitably used. Examples of the higher fatty acid used in the surface treatment (surface coating) include stearic acid, palmitic acid, myristic acid, and lauric acid.
The pigment described above is preferably used by dispersing the pigment to have the volume average particle diameter described above, with a known dispersing machine such as a dissolver, a sand mill, a ball mill or the like, in the co-presence of, for example, a dispersing aid such as sodium hexametaphosphate, a partially saponified or completely saponified polyvinyl alcohol, a modified polyvinyl alcohol, a polyacrylic acid copolymer, various surfactants or the like, and preferably a partially saponified or completely saponified polyvinyl alcohol, an itaconic acid-modified polyvinyl alcohol, a terminal alkyl-modified polyvinyl alcohol, or an ammonium salt of a polyacrylic acid copolymer. That is, it is preferable that the pigment is finely dispersed until the 50% volume average particle diameter reaches a particle diameter in the range of from 0.1 μm to 5.0 μm, and then used.
Examples of non-water-soluble materials that are dispersed as described above include a pigment; a lubricating agent, a releasing agent, a gliding agent, and a matting agent, which have been dispersed or emulsifying-dispersed.

- Lubricating agent, releasing agent and gliding agent -

The thermal distribution display layer may contain a lubricating agent, a releasing agent, or a gliding agent.
Generally, in regard to the lubricating agent, releasing agent and gliding agent (hereinafter, may be referred to as "lubricating agent and the like") that are used in the thermal distribution display layer, an embodiment including a lubricating agent that is liquid at normal temperature or has a melting point of lower than 40°C and a lubricating agent that has a melting point of 40°C or higher is preferable.
Examples of the lubricating agent and the like that are liquid at normal temperature as described above include silicone oils, liquid paraffin, and lanolin. Particularly, silicone oils are preferable. These silicone oils may have a substituent such as a carboxyl group and a polyoxyethylene group, and the viscosity of the silicone oils is preferably from 100 cps

to 100,000 cps.

Examples of the lubricating agent and the like that have a melting point of lower than 40°C as described above include a polyoxyethylene alkyl ether, a polyoxyethylene alkyl ether acetate, a polyoxyethylene alkyl ether sulfate, and a polyoxyethylene alkyl ether phosphate.

The lubricating agent and the like that are liquid at normal temperature and the lubricating agent and the like that have a melting point of 40°C or lower described above may be used singly, or in combination of two or more kinds.

The lubricating agent and the like that have a melting point of 40°C or higher as described above are compounds having a melting point of 160°C or lower, and preferably compounds having a melting point of 140°C or lower. Examples thereof include stearic acid amide (melting point 100°C), methylolstearic acid amide (101°C), polyethylene waxes (melting point 110°C or lower), paraffin wax having a melting point of from 50°C to 90°C, glycerin tri-12-hydroxystearate (melting point 88°C), oleic acid amide (melting point 73°C), zinc oleate (melting point 75°C), lauric acid amide (melting point 84°C), aluminum stearate (melting point 102°C), manganese stearate (melting point 112°C), zinc stearate (melting point 125°C), calcium stearate (melting point 160°C), ethylenebisstearoamide (melting point 140°C), magnesium stearate (melting point 132°C), magnesium palmitate (melting point 122°C), and magnesium myristate (melting point 131°C). These lubricating agents having a melting point of 40°C or higher may also be used singly, or two or more kinds may be used in combination.

When the lubricating agent and the like used in the invention are insoluble in water, the lubricating agent and the like are added to the thermal distribution display layer in the form of a dispersion or an emulsion. Furthermore, when the lubricating agent and the like are solid, the lubricating agent and the like are used (1) in the form of an aqueous dispersion in which the lubricating agent and the like are dispersed with a known dispersing machine such as a homogenizer, a dissolver, a sand mill or the like, in the co-presence of a dispersant such as a water-soluble polymer (such as polyvinyl alcohol or the like), various surfactants, or the like, or (2) in the form of an emulsion in which the lubricating agent and the like are dissolved in a solvent, and then are emulsifying-dispersed with a known emulsifying apparatus such as a homogenizer, a dissolver, a colloid mill, or the like, in the co-presence of a dispersant such as a water-soluble polymer or various surfactants. Also, when the lubricating agent and the like are liquid, the lubricating agent and the like are used in the form of an emulsion such as described above. The volume average particle diameter of the lubricating agent and the like that are dispersed or emulsifying-dispersed is preferably from 0.1 μm to 5.0 μm and more preferably from 0.1 μm to 2.0 μm.

In contrast, a lubricating agent that is soluble in water such as a polyoxyethylene alkyl ether, a polyoxyethylene alkyl ether acetate, a polyoxyethylene alkyl ether sulfate, a polyoxyethylene alkyl ether phosphate, or the like can be added to the thermal distribution display layer, after dissolving the lubricating agent in water at a given concentration in view of the solubility.

- Matting agent -

The thermal distribution display layer may also contain a matting agent. Examples of the matting agent include fine particles of starch and the like obtainable from barley, wheat, corn, rice and beans; fine particles of a synthetic polymer such as cellulose fiber, a polystyrene resin, an epoxy resin, a polyurethane resin, a urea-formalin resin, a poly(meth)acrylate resin, a polymethyl (meth)acrylate resin, a copolymer resin of vinyl chloride, vinyl acetate or the like, or polyolefin; and fine particles of an inorganic substance such as calcium carbonate, titanium oxide, kaolin, smectite clay, aluminum hydroxide, silica, and zinc oxide. Furthermore, from the viewpoint of improving the transparency of the thermal distribution display, the matting agent is preferably a substance in the form of fine particles having a refractive index of from 1.45 to 1.75, and the volume average particle diameter is preferably from 1 μm to 20 μm (particularly, from 1 μm to 10 μm).

According to the invention, in order to uniformly form the thermal distribution display layer on a support, it is preferable to add a surfactant to a coating liquid for thermal distribution display layer formation. The surfactant is preferably a sulfosuccinic acid-based alkali metal salt, a fluorine-containing surfactant, or the like, and specific examples thereof include a sodium salt, potassium salt or ammonium salt of di(2-ethylhexyl)sulfosuccinic acid, di(n-hexyl)sulfosuccinic acid, or the like; an acetylene glycol derivative; a sodium salt, potassium salt or ammonium salt of perfluoroalkyl sulfuric acid; and a perfluoroalkylbetaine compound.

The heat-fusible substance can be contained in the thermal distribution display layer for the purpose of attempting to improve thermal responsiveness. Examples of such a heat-fusible substance include an aromatic ether, a thioether, an ester, an aliphatic amide and a ureide. These examples are described in JP-ANo. 58-57989, JP-A No. 58-87094, JP-A No. 61-58789, JP-A No. 62-109681, JP-ANo. 62-132674, JP-ANo. 63-151478, JP-A No. 63-235961, JP-A No. 2-184489, JP-A No. 2-215585, and the like.

Suitable examples of the ultraviolet absorber include a benzophenone-based ultraviolet absorber, a benzotriazole-based ultraviolet absorber, a salicylic acid-based ultraviolet absorber, a cyanoacrylate-based ultraviolet absorber, and an oxalic acid anilide-based ultraviolet absorber. These examples are described in JP-A No. 47-10537, JP-A No.

58-111942, JP-A No. 58-212844, JP-A No. 59-19945, JP-A No. 59-46646, JP-A No. 59-109055, JP-A No. 63-53544, Japanese Patent Examined Application (JP-B) No. 36-10466, JP-B No. 42-26187, JP-B No. 48-30492, JP-B No. 48-31255, JP-B No. 48-41572, JP-B No. 48-54965, JP-B No. 50-10726, U.S. Patent Nos. 2719086, 3707375, 3754919 and 4220711, and the like.

Suitable examples of the oxidation inhibitor include a hindered amine-based oxidation inhibitor, a hindered phenol-based oxidation inhibitor, an aniline-based oxidation inhibitor, and a quinoline-based oxidation inhibitor. These examples are described in JP-A No. 59-155090, JP-A No. 60-107383, JP-A No. 60-107384, JP-A No. 61-137770, JP-A No. 61-139481, JP-A No. 61-160287, and the like.

Examples of the antistatic agent include fine particles of a metal oxide, an inorganic electrolyte, and a polymer electrolyte.

The thermal distribution display layer of the invention preferably satisfies the following expression (1) and expression (2) when the temperature in°C at which the color optical density reaches [background optical density (Dmin) + 0.1] is designated as TA, the temperature in °C at which the color optical density reaches [maximum optical density (Dmax) - 0.1] is designated as TB, and an intermediate temperature in °C between TA and TB is designated as TC,.

$$0.011 \leqq \frac{(DC - DA)}{(TC - TA)} \leqq 0.035 \quad \text{Expression (1)}$$

$$0.011 \leqq \frac{(DB - DC)}{(TB - TC)} \leqq 0.035 \quad \text{Expression (2)}$$

In the expression (1) and the expression (2), DA represents the optical density of a colored part where a color is developed as a result of heating the thermal distribution display layer to the temperature TA; DB represents the optical density of a colored part where a color is developed as a result of heating the thermal distribution display layer to the temperature TB; and DC represents the optical density of a colored part where a color is developed as a result of heating the thermal distribution display layer to the temperature TC.

Hereinafter, as shown below, a fraction represented in the expression (1) is also referred to as $\gamma 1$, and a fraction represented in the expression (2) is also referred to as $\gamma 2$.

$$\gamma 1 = \frac{(DC - DA)}{(TC - TA)}$$

$$\gamma 2 = \frac{(DB - DC)}{(TB - TC)}$$

The background optical density (Dmin) means the optical density of the thermal distribution display layer surface

where an image is not recorded (non-color-developed area), before a treatment of externally applying, to the thermal distribution display layer, thermal energy such as heating, warming, or the like is performed. Furthermore, a heat source heated to a given temperature is brought into contact for 10 seconds at an applied pressure of 500 g/cm$^2$ using a ten serial-type thermal characteristics testing machine (manufactured by Shinto Scientific Co., Ltd.), and the temperature at which the optical density measured by a Macbeth densitometer (RD-19I type, manufactured by GretagMacbeth AG) reaches [optical density of a non-color-developed part + 0.1] is defined as the static color development starting temperature, and this is designated as TA. That is, the temperature in °C at which the density reaches [background optical density (Dmin) plus 0.1] is designated as TA, and the density obtained by adding 0.1 to [background optical density (Dmin)], that is, the optical density of a colored part, which is a part where a color is developed by heating the thermal distribution display layer to the temperature TA, is designated as DA.

The maximum optical density (Dmax) means the maximum optical density at a colored part in which a color is developed by performing a treatment of externally applying thermal energy such as heating, warming, or the like to the thermal distribution display layer. According to the invention, the temperature in °C at which the optical density reaches [maximum optical density (Dmax) minus 0.1] is designated as TB, and the density obtained by subtracting 0.1 from [maximum optical density (Dmax)], that is, the optical density of a colored part, which is a part in which a color is developed by heating the thermal distribution display layer to the temperature TB, is designated as DB.

Furthermore, an intermediate temperature in °C between TA and TB is designated as TC, and the optical density of a colored part in which a color is developed by heating the thermal distribution display layer to the temperature TC is designated as DC.

According to the invention, the optical density of a colored part in which a color is developed by performing a treatment of externally applying thermal energy such as heating, warming, or the like to the thermal distribution display layer is referred to as the color optical density.

Since the color optical density (optical density) of the colored part in which a color is developed by heating, undergoes a small change with respect to a small temperature difference, a difference in the color optical density in accordance with the temperature difference can be exhibited over a wide temperature range. Therefore, even if a temperature difference among various parts of the measured surface, for which the thermal distribution is to be examined, is large, an image having a gradation can be obtained, and thus the thermal distribution of the image can be easily examined.

As such, in order for the color optical density (optical density) to undergo a small change with respect to a small temperature difference, it is preferable that the expression (1) and the expression (2) are satisfied.

When $\gamma 1$ and $\gamma 2$ are each 0.011 or greater, the difference in the color optical density is not excessively small, and the thermal distribution can be examined. Furthermore, when $\gamma 1$ and $\gamma 2$ are each 0.035 or less, the difference in the color optical density is not excessively large, and the temperature range that displays gradation is not excessively narrow, and is therefore practical.

Furthermore, it is preferable that the above-described TA, TB, TC, DA, DB and DC are in a relationship that satisfies the following expression (4).

$$-0.016 \leqq \frac{(DB - DC)}{(TB - TC)} - \frac{(DC - DA)}{(TC - TA)} \leqq 0.016$$

Expression (4)

That is, it is preferable that the difference between $\gamma 1$ and $\gamma 2$ be within $\pm 0.016$. When the difference between $\gamma 1$ and $\gamma 2$ is within $\pm 0.016$, the coloring gradation is nearly linear, and the thermal distribution is easier to be intuitively grasped. The difference between $\gamma 1$ and $\gamma 2$ is more preferably within $\pm 0.01$ for the ease of attaining consistency with an evaluation by visual inspection.

$\gamma 1$ is preferably $0.015 \leq \gamma 1 \leq 0.03$, and more preferably $0.018 \leq \gamma 1 \leq 0.027$, from the viewpoint of the range capable of measuring temperature distribution.

$\gamma 2$ is preferably $0.015 \leq \gamma 2 \leq 0.03$, and more preferably $0.018 \leq \gamma 2 \leq 0.027$, from the viewpoint of the range capable of measuring temperature distribution.

From the viewpoint of allowing the thermal distribution to be displayed even with a large temperature difference, the temperature difference between TA and TB (TB - TA) is preferably 30°C or greater. Furthermore, (TB - TA) is preferably from 30°C to 75°C.

From the viewpoint of the range of temperature measurement, it is preferable that the TA, the TB, the DA and the DB satisfy the following expression (3).

$$0.011 \leqq \frac{(DB-DA)}{(TB-TA)} \leqq 0.029$$

Expression (3)

Hereinafter, as shown below, a fraction represented in the expression (3) is also referred to as $\gamma 3$.

$$\gamma 3 = \frac{(DB-DA)}{(TB-TA)}$$

When $\gamma 3$ is 0.011 or greater, the range of temperature measurement is not excessively broad, and is suitable for the examination of distribution. When $\gamma 3$ is 0.029 or less, the range of temperature distribution measurement is not excessively narrow, and is therefore practical.
$\gamma 3$ is preferably $0.013 \leq \gamma 3 \leq 0.27$, and more preferably $0.015 \leq \gamma 3 \leq 0.025$, from the viewpoint of the range capable of an examination of temperature distribution.

- Formation of thermal distribution display layer -

The thermal distribution display layer according to the invention can be formed by applying, on a support, a coating liquid for thermal distribution display layer formation which is obtained by blending the organic polymer composite, the electron-accepting compounds, the binder, and the component that can be optionally contained in the thermal distribution display layer.
According to the invention, when the electron-accepting compounds are added to the coating liquid for thermal distribution display layer formation, and a thermal sensitizer and the like are further added, the electron-accepting compounds and the thermal sensitizer and the like can be added after separately performing emulsifying-dispersion, solid-dispersion or atomization, or can be added after appropriately mixing the electron-accepting compounds and the thermal sensitizer and the like and then performing emulsifying-dispersion, solid-dispersion or atomization. Example of the method of performing emulsifying-dispersion include a method of dissolving these compounds in an organic solvent and adding the resultant to an aqueous solution of a water-soluble polymer while the aqueous solution of the water-soluble polymer is stirred with a homogenizer or the like. In order to promote atomization, it is preferable to use one or more of a hydrophobic organic solvent, a surfactant, and a water-soluble polymer.
In order to perform solid-dispersion of the electron-accepting compounds, the thermal sensitizer and the like, powders of these components are introduced into an aqueous solution of a water-soluble polymer to perform atomization by using a known dispersing means such as a ball mill or the like. The atomization is preferably carried out so as to obtain a particle diameter that can satisfy the characteristics required by the thermal distribution display and the production method thereof such as thermal sensitivity, preservability, transparency of the recording layer, and production suitability.
The electron-accepting compounds are preferably prepared so as not to be in an emulsified state, but to be in a solid-dispersed state.
The coating liquid for thermal distribution display layer formation can be prepared by, for example, mixing the organic polymer composite produced as described above with the solid-dispersion containing the electron-accepting compounds.
The water-soluble polymer used as the protective colloid in the preparation of the organic polymer composite, and the water-soluble polymer used as the protective colloid in the preparation of the dispersion each function as a binder in the thermal distribution display layer. Furthermore, according to a preferred embodiment, the coating liquid for thermal distribution display layer formation is prepared by adding and mixing a binder, apart from these protective colloids.
The thermal distribution display layer according to the invention is preferably provided on the support in an

amount in the range of from 1 to 25 g/m$^2$. Furthermore, the thickness of the thermal distribution display layer is preferably from 1 $\mu$m to 25 $\mu$m.

The thermal distribution display layer can be used in a form that two or more layers are laminated as described above, and in this case, the total amount of all the thermal distribution display layers in the thermal distribution display is preferably from 1 to 25 g/m$^2$.

(Support)

The support according to the invention can be appropriately selected among known supports, and for example, it is considered to use a neutral paper, an acidic paper, a recycled paper, a polyolefin resin-laminated paper, a synthetic paper; a polyester film, a polyimide film, a cellulose derivative film such as a cellulose triacetate film or the like, a polystyrene film, a polyolefin film such as a polypropylene film, a polyethylene film or the like; a film formed by incorporating one kind, or two or more kinds of poly-4-methyl-1-pentene, an ionomer, polyvinyl chloride, polyvinylidene chloride, an ABS resin, an AS resin, a methacrylic resin, polyvinyl alcohol, EVA, an epoxy resin, an unsaturated polyester resin, a phenolic resin, a urea-melamine resin, a polyurethane resin, a silicone resin, a polyamide resin, polyacetal, polycarbonate, a modified polyphenylene ether, a polyester resin, a fluorine resin, polyphenylene sulfide, polysulfone, polyarylate, polyether imide, polyether sulfone, polyether ketone, polyamideimide, polyallyl ether nitrile, polybenzoimidal, a metal foil and the like; or a composite sheet combining these films.

Among them, in order to effectively prevent deformation such as curling or the like, the thermal shrinkage percentage in the longitudinal direction and the transverse direction of the support is preferably less than 1%, and more preferably 0.5% or less.

Particularly, in the case of imparting transparency, a support formed from a polymer film is preferable, and examples thereof include a synthetic polymer film such as a polyester film of polyethylene terephtalate, polybutylene terephthalate, or polyethylene naphthalate; a cellulose triacetate film, or a polyolefin film of polypropylene or polyethylene. Particularly, a support made of polyethylene terephthalate (PET) or polyimide is preferred.

The thickness of the synthetic polymer film is preferably 20 $\mu$m or greater, more preferably 30 $\mu$m or greater, and is even more preferably 50 $\mu$m or greater. When the thickness of the synthetic polymer film is 10 $\mu$m or greater, wrinkles are not formed, and handling is easier.

Furthermore, the synthetic polymer film may be colored arbitrary color. Examples of a method of coloring the synthetic polymer film include a method of forming a film by kneading a resin with a dye before forming a resin film; and a method of coating, on a colorless transparent resin film, a coating liquid prepared by dissolving a dye in an appropriate solvent by a known coating method, for example, a gravure coating method, a roller coating method, a wire coating method or the like. Among them, it is preferable to form a film from polyimide and then to perform a heat resistance treatment, a stretching treatment, an antistatic treatment or the like. A polyimide film having a thickness of 50 $\mu$m or greater is particularly preferable as the support of the invention.

(Other layers)

The thermal distribution display of the invention may have other layers such as a protective layer, an intermediate layer or a back layer other than the thermal distribution display layer, to the extent that the effects of the invention are not impaired.

<Method of producing thermal distribution display>

The thermal distribution display of the invention can be produced by, for example, applying the coating liquid for thermal distribution display layer formation (hereinafter, referred to as a "thermal distribution display layer formation-coating liquid") on one side of the support to form the thermal distribution display layer. Furthermore, if necessary, an intermediate layer-coating liquid and a protective layer-coating liquid may be applied on the thermal distribution display layer, and together with the application or without performing the application, a back layer composed of a single layer or plural layers can be formed on an opposite side from the coated side, by applying a back layer-coating liquid. Furthermore, if necessary, other layers may also be formed on the one side and the opposite side.

Here, the thermal distribution display layer, the intermediate layer and the protective layer may be simultaneously formed, and in that case, the thermal distribution display layer, the intermediate layer and the protective layer can be formed by simultaneously multilayer-coating, on the support, the thermal distribution display layer formation-coating liquid, the intermediate layer-coating liquid, and the protective layer-coating liquid.

<Method of examining temperature distribution>

In the method of examining a thermal distribution according to the invention, the thermal distribution display of the invention as described above is used.

Specifically, for example, a heat quantity distribution is examined by disposing the thermal distribution display of the invention on a heated surface such as a heated roller, a heat plate, or the like, heating the thermal distribution display layer of the thermal distribution display of the invention by the heat of the heated surface to develop a color, and recording an image on the thermal distribution display. The thermal distribution display of the invention may be disposed so as to contact the heated surface directly, or may be disposed with an intermediate body such as a sheet or a film interposed between the heated surface and the thermal distribution display of the invention.

Examples

Hereinafter, the invention is described more specifically by way of Examples, but the invention is not intended to be limited to the following Examples as long as the gist is maintained. In addition, unless particularly stated otherwise, the units "parts" and "percent (%)" are on a mass basis.

<Example 1>

[Production of organic polymer composite]

54.6 parts of a compound represented by the following structural formula [201] as an electron-donating dye precursor, and 2.08 parts of a compound represented by the following structural formula [207] were added to 107 parts of ethyl acetate. The mixture was heated to 70°C to dissolution, and then was cooled to 45°C. 87.3 parts of isocyanate (trade name: "TAKENATE D127N", manufactured by Mitsui Takeda Chemicals, Inc.) was added thereto, and the resulting mixture was mixed to obtain a solution.

The solution was added to an aqueous phase formed from 276 parts of a 5.9% aqueous solution of polyvinyl alcohol (trade name: "MP-103", manufactured by Kuraray Co., Ltd.), and then emulsifying dispersion was carried out at a rotation speed of 6800 rpm using a Robomix (manufactured by Tokushu Kika Kogyo Co., Ltd.) to obtain an emulsion liquid. 23 parts of water and 5.7 parts of tetraethylenepentamine were added to the emulsion liquid thus obtained, and then an encapsulation reaction was carried out over 4 hours at a temperature of 60°C. Finally, the concentration was adjusted to 22% with water, and thus a polymer composite liquid A containing particles having an average particle diameter of 4.8 μm was obtained.

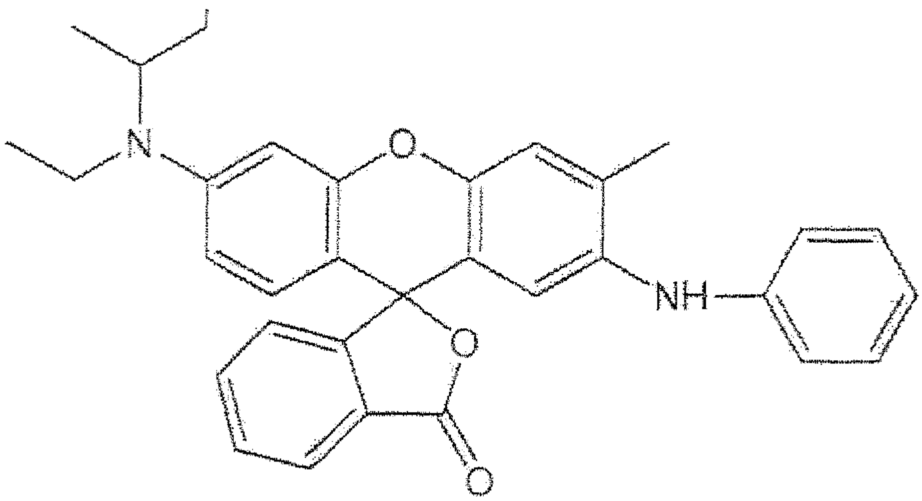

[201]

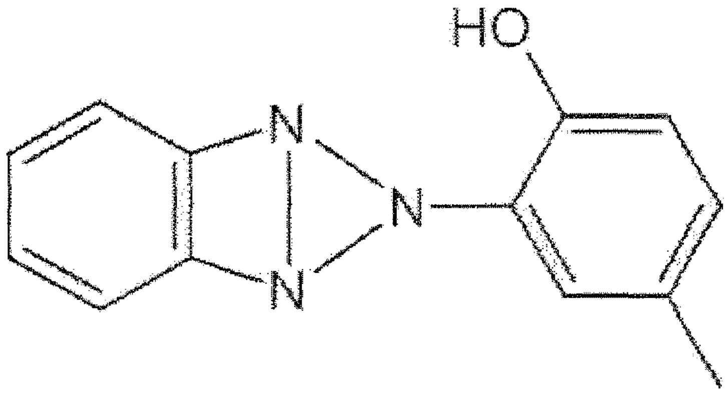

[207]

(Preparation of electron-accepting compound dispersion liquid B)

A liquid obtained by adding 34.6 parts of a 15% aqueous solution of PVA (PVA205, trade name, manufactured by Kuraray Co., Ltd.) to 110.59 parts of distilled water, and then adding 35.77 parts of the following compound (1-1) and 1.88 parts of the following compound (2-1) as electron-accepting compounds, and 3.32 parts of a sodium salt of a special polycarboxylic acid type polymer (trade name: DEMOL EP, manufactured by Kao Corp.; concentration of 25%) thereto was dispersed with a sand grinder, and thus a dispersion liquid containing particles having a median particle diametor of 0.7 μm (measured with a MICROTRAC FRA (trade name, manufactured by Honeywell International, Inc.)) was obtained. Finally, the concentration was adjusted to 22% with water, and thus an electron-accepting compound dispersion liquid B, which was a dispersion of electron-accepting compounds, was obtained.

The compound (1-1) [specific electron-accepting compound 1] and the compound (2-1) [specific electron-accepting compound 2] used in the preparation of the electron-accepting compound dispersion liquid B are represented by the following structural formulae.

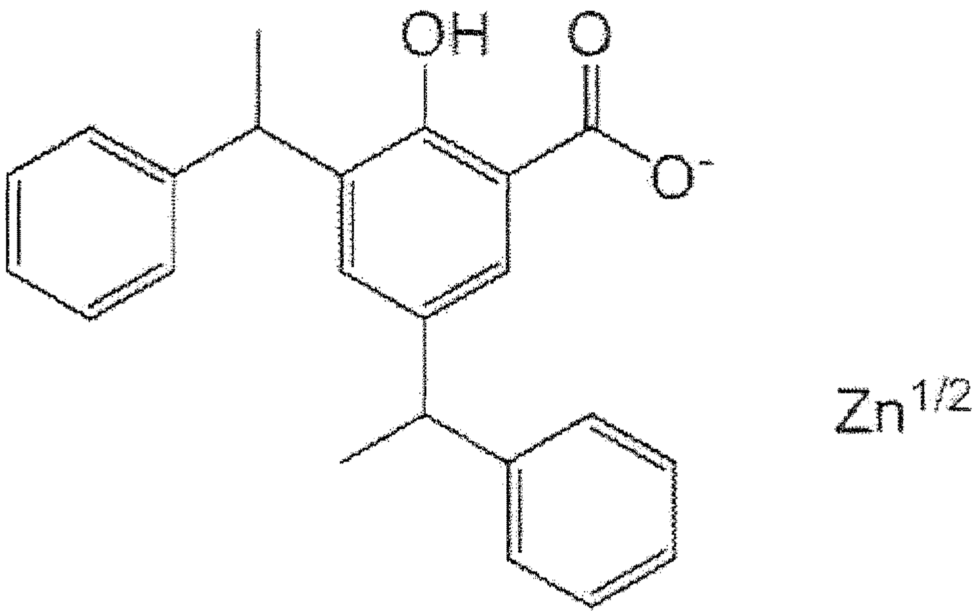

Compound (1-1)

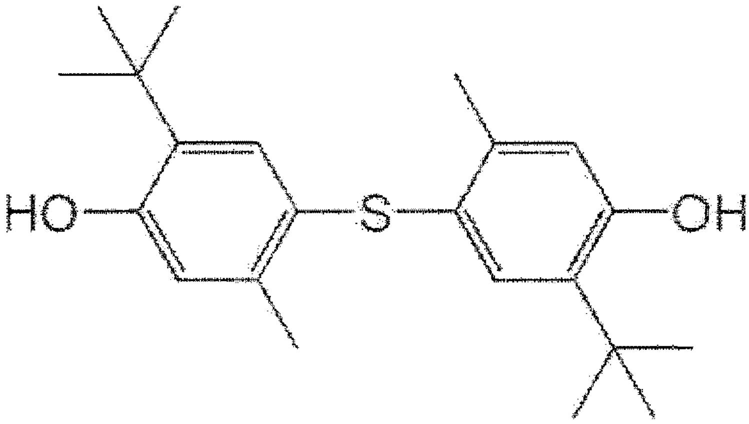

Compound (2-1)

(Preparation of pigment dispersion liquid C)

110 parts of calcium carbonate, 3 parts of a 40% aqueous solution of sodium hexametaphosphate (sodium hexametaphosphate, manufactured by Koizumi Yakuhin Co., Ltd.), and 1.5 parts of a 40% aqueous solution of an acrylic acid-maleic acid copolymer sodium salt (trade name: "POIZ 520", manufactured by Kao Corp.) were added to 180 parts of distilled water, and this was dispersed with a sand grinder. Thus, a calcium carbonate dispersion liquid [pigment dispersion liquid C] containing particles having a median particle diameter of 1.0 μm (measured with an "LA750 (trade name)" manufactured by Horiba, Ltd.) was obtained.

(Preparation of coating liquid D for support-undercoat layer)

The following respective components were mixed and stirred with a dissolver, and thus a dispersion liquid E was obtained.

| | |
|---|---|
| • Calcined kaolin (amount of oil absorption 75 ml/100 g) | 100 parts |
| • Sodium hexametaphosphate | 1 part |
| • Distilled water | 110 parts |

20 parts of SBR (styrene-butadiene rubber latex) and 25 parts of oxidized starch (25%) were added to the dispersion liquid E thus obtained, and thus a coating liquid D for a support-undercoat layer was obtained.

[Production of support]

A support was produced by applying, on a high quality paper having a smoothness according to JIS-8119 of 150 seconds, the coating liquid D for a support undercoat layer by a blade coater such that the amount of application after drying was 8 g/m$^2$ to form an undercoat layer.

[Production of thermal distribution display 1]

1.46 g of distilled water, 4.85 g of the polymer composite liquid A (solid content concentration 22%), 6.94 g of the electron-accepting compound dispersion liquid B (solid content concentration 22%), and 1.55 g of the pigment dispersion liquid C were mixed, and the mixture was applied on the support by bar coating such that the amount of the electron-donating dye precursor thus coated was 0.55 g/m$^2$. Thus, a thermal distribution display 1 was obtained.

The thermal distribution display 1 was designated as the thermal distribution display of Example 1.

<Example 2 to Example 7, and Comparative Example 1 to Comparative Example 6>

Thermal distribution displays of Example 2 to Example 7 and Comparative Example 1 to Comparative Example 6 were produced in the same manner as in the production of the thermal distribution display 1 of Example 1, except that the electron-accepting compounds were changed as indicated in the following Table 1.

The structures of the compound (3) used in Comparative Example 4, and of the compound (4) used in Comparative Example 6 are as shown below, and compounds 2-2 to 2-4 are the exemplary compounds (2-2) to (2-4) described above.

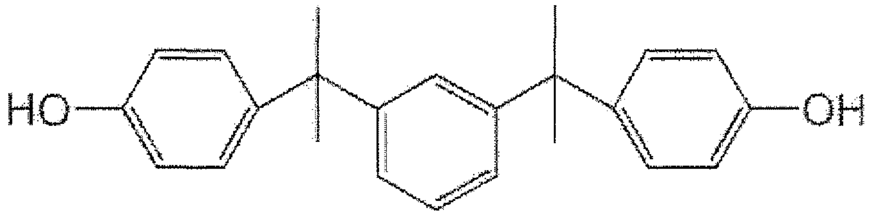

Compound (3)

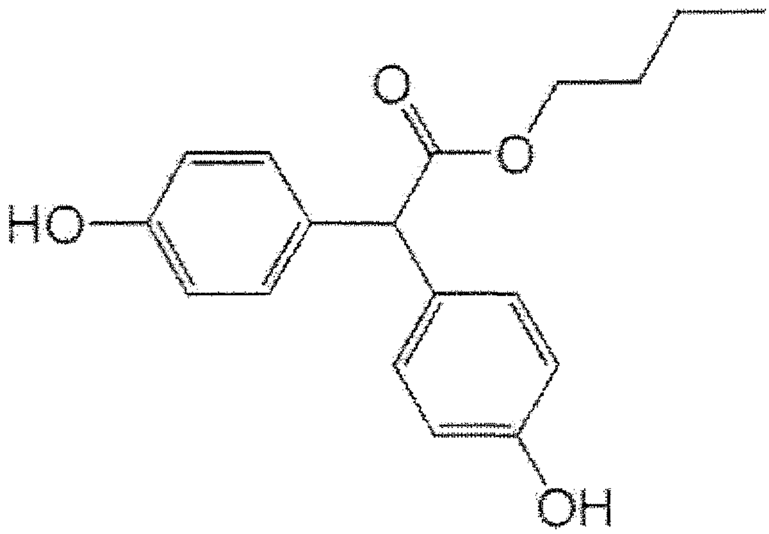

Compound (4)

γ1 to γ3 and (TB - TA), which are determined from the relationship between the color optical density and the temperature described above as characteristics of the thermal distribution display layer, of Example 1 to Example 7 and Comparative Example 1 to Comparative Example 6 produced as described above, are shown in the following Table 1.

<Evaluation>

(Raw preservability)

For the thermal distribution displays of Example 1 to Example 7 and Comparative Example 1 to Comparative Example 6 obtained as described above, each non-color-developed thermal distribution display on which a thermal distribution was not displayed, was left to stand for 24 hours in an environment of 60°C and 30% RH. Subsequently, the thermal distribution display was brought into contact with a Macbeth densitometer (RD-19I) at temperatures ranging from 90°C to 200°C at increments of 10°C each for 10 seconds, using a 10 serial type thermal characteristics testing machine manufactured by Shinto Scientific Co., Ltd., and the optical density was measured. The same evaluation was performed also on the thermal distribution displays prior to being left to stand, and the changes in the maximum optical density values at that time were measured. Subsequently, the value of raw preservability was determined as the ratio of the measured density after being left to stand for 24 hours relative to the measured density prior to being left to stand (100%). A larger value means more satisfactory raw preservability.

The evaluation results are shown in Table 1.

(Comprehensive evaluation)

A comprehensive evaluation was performed on each of the thermal distribution displays thus obtained, based on γ1, γ2, and the evaluation of raw preservability obtained as described above. The evaluation criteria are as follows.

- Evaluation criteria -

A: γ1 and γ2 are each 0.015 to 0.03, the difference between them (|γ1 - γ2|) is 0.010 or less, and the raw preservability is 90% or greater.
B: γ1 and γ2 are each 0.015 to 0.03, the difference between them (|γ1 - γ2|) is 0.016 or less, and the raw preservability is 90% or greater.
C: γ1 and γ2 are each 0.011 to 0.035, the difference between them (|γ1 - γ2|) is 0.016 or less, and the raw preservability is 90% or greater.
D: The values do not fall in the ranges described above.

[Table 1]

| | | Compound (upper row: type, lower row: amount [%]) | | | Υ3 | Υ1 | Υ2 | γ1-γ2 (Absolute value) | TB-TA (°C) | Raw preservability | Comprehensive evaluation |
|---|---|---|---|---|---|---|---|---|---|---|---|
| | | 1 | 2 | 3 | | | | | | | |
| Examples | 1 | Compound 1-1 | Compound 2-1 | - | 0.018 | 0.021 | 0.017 | 0.004 | 58 | 92% | A |
| | | 95 | 5 | - | | | | | | | |
| | 2 | Compound 1-1 | Compound 2-1 | - | 0.019 | 0.019 | 0.019 | 0.001 | 46 | 93% | A |
| | | 90 | 10 | - | | | | | | | |
| | 3 | Compound 1-1 | Compound 2-1 | - | 0.019 | 0.027 | 0.015 | 0.012 | 49 | 92% | B |
| | | 73 | 27 | - | | | | | | | |
| | 4 | Compound 1-1 | Compound 2-1 | - | 0.020 | 0.031 | 0.015 | 0.016 | 49 | 97% | C |
| | | 50 | 50 | - | | | | | | | |
| | 5 | Compound 1-1 | Compound 2-2 | - | 0.016 | 0.16 | 0.017 | 0.001 | 66 | 99% | A |
| | | 90 | 10 | - | | | | | | | |
| | 6 | Compound 1-1 | Compound 2-3 | - | 0.014 | 0.011 | 0.019 | 0.007 | 74 | 95% | C |
| | | 90 | 10 | - | | | | | | | |
| | 7 | Compound 1-1 | Compound 2-4 | - | 0.016 | 0.016 | 0.016 | 0.001 | 60 | 95% | A |
| | | 90 | 10 | - | | | | | | | |
| Comparative Examples | 1 | Compound 1-1 | - | - | 0.014 | 0.010 | 0.022 | 0.012 | 48 | 70% | D |
| | | 100 | - | - | | | | | | | |
| | 2 | Compound 1-1 | Compound 2-1 | - | 0.037 | 0.034 | 0.041 | 0.007 | 27 | 97% | D |
| | | 30 | 70 | - | | | | | | | |
| | 3 | Compound 1-1 | Compound 2-1 | - | 0.038 | 0.028 | 0.061 | 0.033 | 23 | 97% | D |
| | | 10 | 90 | - | | | | | | | |
| | 4 | Compound 1-1 | Compound 3 | - | 0.013 | 0.011 | 0.015 | 0.004 | 77 | 83% | D |
| | | 90 | 10 | - | | | | | | | |
| | 5 | - | Compound 2-1 | - | 0.038 | 0.027 | 0.064 | 0.037 | 21 | 96% | D |
| | | - | 100 | - | | | | | | | |
| | 6 | Compound 1-1 | Compound 2-1 | Compound 4 | 0.029 | 0.058 | 0.019 | 0.039 | 32 | 98% | D |
| | | 33.33 | 33.33 | 33.33 | | | | | | | |

Example 4 is a reference example.

From the Table 1, it is understood that the thermal distribution displays of the Examples are capable of displaying a thermal distribution even with a large temperature difference, and that the raw preservability of the thermal distribution displays is excellent. In contrast, regarding the thermal distribution displays of the Comparative Examples, the entire surface of the thermal distribution display layer developed a dark color, or an image in which the contrasting density was not differentiable was recorded. Thus, the thermal distribution displays could not display thermal distributions.

Furthermore, it is understood that even if the display of a thermal distribution was possible, the raw preservability was not very good.

Herein reference is made of Japanese Patent Application No. 2009-023418.

## Claims

1. A thermal distribution display comprising, on a support, a thermal distribution display layer which comprises:

   an organic polymer composite containing an electron-donating dye precursor and a polymer;
   an electron-accepting compound A represented by the following formula (1) and an electron-accepting compound B represented by the following formula (2), which both develop a color of the electron-donating dye precursor; and
   a binder,

   wherein a content ratio (A : B) of the electron-accepting compound A represented by the formula (1) and the electron-accepting compound B represented by the formula (2) is from 95 : 5 to 70 : 30 on a mass basis, and a content of the electron-accepting compound A represented by the formula (1) in a total amount of electron-accepting compounds is 40% by mass or greater:

   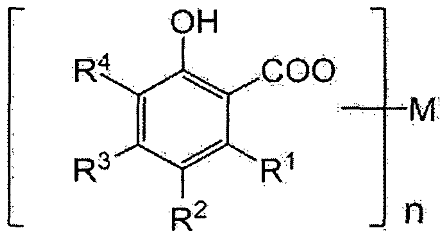

   Formula (1)

   wherein, in the formula (1), each of $R^1$, $R^2$, $R^3$ and $R^4$ independently represents a hydrogen atom, a halogen atom, an amino group, a carboxy group, a carbamoyl group, a hydroxy group, an alkylsulfonyl group, an alkyl group, a phenyl group, a benzyl group, a tolyl group, a naphthyl group, a 2-furyl group, a 2-thienyl group, or a 2-pyridyl group, and any two of $R^1$ to $R^4$ that are adjacent to each other may be bonded to form a ring; M represents a metal atom having a valency of n; and n represents an integer of from 1 to 3; and

   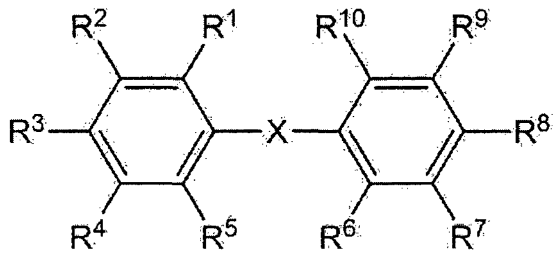

   Formula (2)

   wherein, in the formula (2), each of $R^1$ to $R^{10}$ independently represents a hydrogen atom, a halogen atom, a hydroxy group, a carboxy group, an alkoxy group having 1 to 4 carbon atoms, an alkyl group having 1 to 4 carbon atoms, or a phenylsulfonyl group; at least one of $R^1$ to $R^{10}$ is a hydroxy group; and X represents -S-, $-SO_2-$, $-SO_2NH-$, or $-OCH_2CH_2O-$.

2. The thermal distribution display according to claim 1, wherein the polymer is a polyurethane-polyurea.

3. The thermal distribution display according to claim 1 or 2, wherein when a temperature in °C at which a color optical density reaches [background optical density (Dmin) + 0.1] is designated as TA, a temperature in °C at which the

color optical density reaches [maximum optical density (Dmax) - 0.1] is designated as TB, and an intermediate temperature in °C between TA and TB is designated as TC, the thermal distribution display layer satisfies the following expression (1) and the expression (2):

$$0.011 \leqq \frac{(DC - DA)}{(TC - TA)} \leqq 0.035 \qquad \text{Expression (1)}$$

$$0.011 \leqq \frac{(DB - DC)}{(TB - TC)} \leqq 0.035 \qquad \text{Expression (2)}$$

wherein, in the expression (1) and the expression (2), DA represents an optical density of a colored part where a color is developed as a result of heating the thermal distribution display layer to the temperature TA; DB represents an optical density of a colored part where a color is developed as a result of heating the thermal distribution display layer to the temperature TB; and DC represents an optical density of a colored part where a color is developed as a result of heating the thermal distribution display layer to the temperature TC.

**4.** The thermal distribution display according to claim 3, wherein a temperature difference between TA and TB (TB - TA) is 30°C or greater.

**5.** The thermal distribution display according to claim 3 or 4, wherein TA, TB, DA and DB satisfy the following expression (3):

$$0.011 \leqq \frac{(DB - DA)}{(TB - TA)} \leqq 0.029 \qquad \text{Expression (3).}$$

**6.** The thermal distribution display according to any one of claims 3 to 5, wherein TA, TB, TC, DA, DB, and DC satisfy the following expression (4):

$$-0.016 \leqq \frac{(DB - DC)}{(TB - TC)} - \frac{(DC - DA)}{(TC - TA)} \leqq 0.016 \qquad \text{Expression (4).}$$

**7.** A method of examining a thermal distribution, comprising using the thermal distribution display according to any one of claims 1 to 6.

## Patentansprüche

**1.** Wärmeverteilungsanzeige, umfassend auf einem Träger eine Wärmeverteilungs-Anzeigeschicht, die umfasst:

ein organisches Polymerkomposit, das einen Elektronenspendenden Farbstoffvorläufer und ein Polymer umfasst;
eine durch die folgende Formel (1) dargestellte Elektronen-annehmende Verbindung A und eine durch die folgende Formel (2) dargestellte Elektronen-annehmende Verbindung B, die beide eine Farbe des Elektronenspenden Farbstoffvorläufers entwickeln; und
ein Bindemittel,

worin das Mengenverhältnis (A:B) der durch die Formel (1) dargestellten Elektronen-annehmenden Verbindung A und der durch die Formel (2) dargestellten Elektronen-annehmenden Verbindung B von 95:5 bis 70:30, massebezogen, beträgt, und der Mengenanteil der durch die Formel (1) dargestellten Elektronen-annehmenden Verbindung A 40 Masse-% oder mehr der Gesamtmenge der Elektronen-annehmenden Verbindungen beträgt:

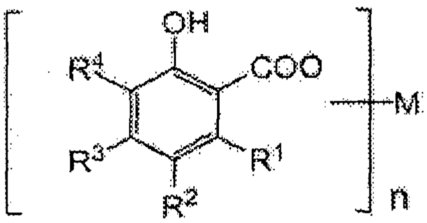

Formel (1)

worin in der Formel (1) jedes von $R^1$, $R^2$, $R^3$ und $R^4$ unabhängig ein Wasserstoffatom, ein Halogenatom, eine Aminogruppe, eine Carboxygruppe, eine Carbamoylgruppe, eine Hydroxygruppe, eine Alkylsulfonylgruppe, eine Alkylgruppe, eine Phenylgruppe, eine Benzylgruppe, eine Tolylgruppe, eine Naphthylgruppe, eine 2-Furylgruppe, eine 2-Thienylgruppe oder eine 2-Pyridylgruppe darstellt, und jegliche zwei von $R^1$ bis $R^4$, die benachbart zueinander vorliegen, miteinander binden können, um einen Ring zu bilden; M ein Metallatom mit einer Valenz n darstellt; und n eine ganze Zahl von 1 bis 3 darstellt; und

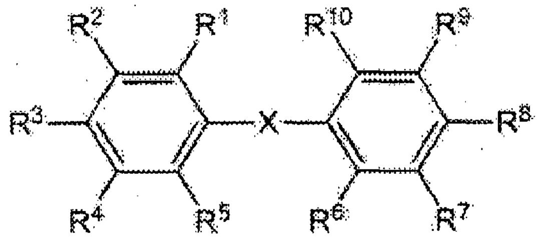

Formel (2)

worin in der Formel (2) jedes von $R^1$ bis $R^{10}$ unabhängig ein Wasserstoffatom, ein Halogenatom, eine Hydroxygruppe, eine Carboxygruppe, eine Alkoxygruppe mit 1 bis 4 Kohlenstoffatomen, eine Alkylgruppe mit 1 bis 4 Kohlenstoffatomen oder eine Phenylsulfonylgruppe darstellt; wobei zumindest eines von $R^1$ bis $R^{10}$ eine Hydroxygruppe ist; und X -S-, $-SO_2-$, $-SO_2NH-$ oder $-OCH_2CH_2O-$ darstellt.

2. Wärmeverteilungsanzeige gemäß Anspruch 1, worin das Polymer ein Polyurethan-Polyharnstoff ist.

3. Wärmeverteilungsanzeige gemäß Anspruch 1 oder 2, worin, wenn eine Temperatur in °C, bei der die optische Farbdichte [optische Hintergrunddichte (Dmin) + 0,1] erreicht, als TA bezeichnet wird, die Temperatur in °C, bei der die optische Farbdichte [maximale optische Dichte (Dmax) - 0,1] erreicht, als TB bezeichnet wird, und eine Zwischentemperatur in °C zwischen TA und TB als TC bezeichnet wird, die Wärmeverteilungs-Anzeigeschicht den folgenden Ausdruck (1) und den Ausdruck (2) erfüllt:

$$0{,}011 \leqq \frac{(DC - DA)}{(TC - TA)} \leqq 0{,}035 \qquad \text{Ausdruck (1)}$$

$$0{,}011 \leqq \frac{(DB - DC)}{(TB - TC)} \leqq 0{,}035 \qquad \text{Ausdruck (2)}$$

worin in dem Ausdruck (1) und dem Ausdruck (2) DA die optische Dichte eines gefärbten Bereichs darstellt, worin eine Farbe als Ergebnis der Erwärmung der Wärmeverteilungs-Anzeigeschicht auf die Temperatur TA entwickelt wird; DB die optische Dichte eines gefärbten Bereichs darstellt, worin eine Farbe als Ergebnis der Erwärmung der Wärmeverteilungs-Anzeigeschicht auf die Temperatur TB entwickelt wird; und DC die optische Dichte eines gefärbten Bereichs darstellt, worin eine Farbe als Ergebnis der Erwärmung der Wärmeverteilungs-Anzeigeschicht auf die Temperatur TC entwickelt wird.

4. Wärmeverteilungsanzeige gemäß Anspruch 3, worin der Temperaturunterschied zwischen TA und TB (TB - TA)

30°C oder mehr beträgt.

5. Wärmeverteilungsanzeige gemäß Anspruch 3 oder 4, worin TA, TB, DA und DB den folgenden Ausdruck (3) erfüllen:

$$0{,}011 \leqq \frac{(DB - DA)}{(TB - TA)} \leqq 0{,}029 \qquad \text{Ausdruck (3).}$$

6. Wärmeverteilungsanzeige gemäß irgendeinem der Ansprüche 3 bis 5, worin TA, TB, TC, DA, DB und DC den folgenden Ausdruck (4) erfüllen:

$$-0{,}016 \leqq \frac{(DB - DC)}{(TB - TC)} - \frac{(DC - DA)}{(TC - TA)} \leqq 0{,}016 \qquad \text{Ausdruck (4).}$$

7. Verfahren zur Untersuchung einer Wärmeverteilung, umfassend die Verwendung der Wärmeverteilungsanzeige gemäß irgendeinem der Ansprüche 1 bis 6.

## Revendications

1. Dispositif d'affichage de distribution thermique comprenant, sur un support, une couche d'affichage de distribution thermique qui comprend :

   un composite polymère organique contenant un précurseur de colorant donneur d'électrons et un polymère ;
   un composé accepteur d'électrons A représenté par la formule (1) suivante et un composé accepteur d'électrons B représenté par la formule (2) suivante, qui développent tous deux une couleur du précurseur de colorant donneur d'électrons; et
   un liant,

   dans lequel un rapport de teneurs (A:B) du composé accepteur d'électrons A représenté par la formule (1) et du composé accepteur d'électrons B représenté par la formule (2) est de 95:5 à 70:30 sur une base en masse, et une teneur du composé accepteur d'électrons A représenté par la formule (1) dans une quantité totale de composés accepteurs d'électrons est de 40 % en masse ou plus :

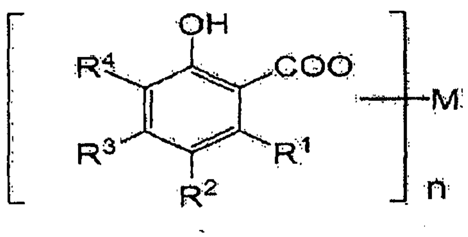

Formule (1)

   dans lequel, dans la formule (1), chacun de $R^1$, $R^2$, $R^3$ et $R^4$ représente indépendamment un atome d'hydrogène, un atome d'halogène, un groupe amino, un groupe carboxy, un groupe carbamoyle, un groupe hydroxy, un groupe alkylsulfonyle, un groupe alkyle, un groupe phényle, un groupe benzyle, un groupe tolyle, un groupe naphtyle, un groupe 2-furyle, un groupe 2-thiényle ou un groupe 2-pyridyle, et deux quelconques de $R^1$ à $R^4$ qui sont adjacents l'un à l'autre peuvent être liés pour former un cycle; M représente un atome de métal ayant une valence de n ; et n représente un nombre entier de 1 à 3 ; et

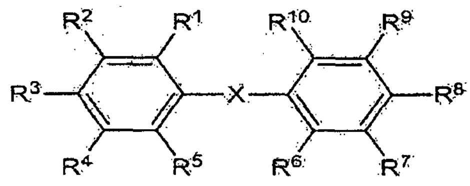

Formule (2)

dans lequel, dans la formule (2), chacun de $R^1$ à $R^{10}$ représente indépendamment un atome d'hydrogène, un atome d'halogène, un groupe hydroxy, un groupe carboxy, un groupe alcoxy ayant 1 à 4 atomes de carbone, un groupe alkyle ayant 1 à 4 atomes de carbone, ou un groupe phénylsulfonyle; au moins un de $R^1$ à $R^{10}$ est un groupe hydroxy ; et X représente -S-, $-SO_2-$, $-SO_2NH-$, ou $-OCH_2CH_2O-$.

2. Dispositif d'affichage de distribution thermique selon la revendication 1, dans lequel le polymère est un polyuréthanne-polyurée.

3. Dispositif d'affichage de distribution thermique selon la revendication 1 ou 2, dans lequel, lorsqu'une température en °C à laquelle une densité optique de couleur atteint [densité optique de fond (Dmin) + 0,1] est désignée en tant que TA, une température en °C à laquelle la couleur la densité optique de couleur atteint [densité optique maximale (Dmax) - 0,1] est désignée en tant que TB, et une température intermédiaire en °C entre TA et TB est désignée en tant que TC, la couche d'affichage de distribution thermique satisfait à l'expression (1) et l'expression (2) suivantes :

$$0.011 \leqq \frac{(DC - DA)}{(TC - TA)} \leqq 0.035 \qquad \text{Expression (1)}$$

$$0.011 \leqq \frac{(DB - DC)}{(TB - TC)} \leqq 0.035 \qquad \text{Expression (2)}$$

dans lequel, dans l'expression (1) et l'expression (2), DA représente une densité optique d'une partie colorée où une couleur est développée en résultat d'un chauffage de la couche d'affichage de distribution thermique à la température TA; DB représente une densité optique d'une partie colorée où une couleur est développée à résultat d'un chauffage de la couche d'affichage de distribution thermique à la température TB ; et DC représente une densité optique d'une partie colorée où une couleur est développée en résultat d'un chauffage de la couche d'affichage de distribution thermique à la température TC.

4. Dispositif d'affichage de distribution thermique selon la revendication 3, dans lequel une différence de températures entre TA et TB (TB - TA) est de 30 °C ou plus.

5. Dispositif d'affichage de distribution thermique 3 ou 4, dans lequel TA, TB, DA et DB satisfont l'expression (3) suivante :

$$0.011 \leqq \frac{(DB - DA)}{(TB - TA)} \leqq 0.029 \qquad \text{Expression (3).}$$

6. Dispositif d'affichage de distribution thermique selon l'une quelconque des revendications 3 à 5, dans lequel TA, TB, TC, DA, DB et DC satisfont l'expression (4) suivante :

$$-0.016 \leqq \frac{(DB - DC)}{(TB - TC)} - \frac{(DC - DA)}{(TC - TA)} \leqq 0.016 \qquad \text{Expression (4).}$$

7. Procédé d'examen d'une distribution thermique, comprenant l'utilisation du dispositif d'affichage de distribution

thermique selon l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5052666 A
- JP 2004117145 A
- JP 6015963 A
- US 23024 A
- US 3491111 A
- US 3491112 A
- US 3491116 A
- US 3509174 A
- US 3624107 A
- US 3627787 A
- US 3641011 A
- US 3462828 A
- US 3681390 A
- US 3920510 A
- US 3959571 A
- US 3971808 A
- US 3775424 A
- US 3853869 A
- US 4246318 A
- JP 63094878 A
- JP 6297856 A
- JP 58057989 A
- JP 58087094 A
- JP 61058789 A
- JP 62109681 A
- JP 62132674 A
- JP 63151478 A
- JP 63235961 A
- JP 2184489 A
- JP 2215585 A
- JP 47010537 A
- JP 58111942 A
- JP 58212844 A
- JP 59019945 A
- JP 59046646 A
- JP 59109055 A
- JP 63053544 A
- JP 3610466 B
- JP 4226187 B
- JP 48030492 B
- JP 48031255 B
- JP 48041572 B
- JP 48054965 B
- JP 50010726 B
- US 2719086 A
- JP 3707375 B
- JP 3754919 B
- JP 4220711 B
- JP 59155090 A
- JP 60107383 A
- JP 60107384 A
- JP 61137770 A
- JP 61139481 A
- JP 61160287 A
- JP 2009023418 A


### Non-patent literature cited in the description


- Polyurethane Resin Handbook. Nikkan Kogyo Shimbun, Ltd, 1987
- **ICHIRO NISHI ; SANGYO TOSHO CO., LTD. et al.** *Surfactant Handbook,* 1980